(19) Europäisches Patentamt / European Patent Office / Office européen des brevets

(11) **EP 4 017 135 B1**

(12) **EUROPEAN PATENT SPECIFICATION**

(45) Date of publication and mention of the grant of the patent:
**31.12.2025   Bulletin 2026/01**

(21) Application number: **20855459.2**

(22) Date of filing: **18.05.2020**

(51) International Patent Classification (IPC):
*H04W 52/02* *(2009.01)*

(52) Cooperative Patent Classification (CPC):
**H04W 52/0235; H04W 52/0216; H04W 52/0219;**
H04L 5/0053; H04W 72/23; Y02D 30/70

(86) International application number:
**PCT/CN2020/090901**

(87) International publication number:
**WO 2021/031632 (25.02.2021 Gazette 2021/08)**

(54) **METHOD AND APPARATUS FOR SENDING DOWNLINK CONTROL INFORMATION (DCI)**

VERFAHREN UND VORRICHTUNG ZUM SENDEN VON DOWNLINK-STEUERINFORMATIONEN (DCI)

PROCÉDÉ ET APPAREIL PERMETTANT D'ENVOYER DES INFORMATIONS DE COMMANDE DE LIAISON DESCENDANTE (DCI)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2019   CN 201910760523**
**18.10.2019   CN 201910994644**

(43) Date of publication of application:
**22.06.2022   Bulletin 2022/25**

(73) Proprietor: **Huawei Technologies Co., Ltd.**
**Longgang District**
**Shenzhen,**
**Guangdong 518129 (CN)**

(72) Inventors:
• **XUE, Lixia**
**Shenzhen, Guangdong 518129 (CN)**
• **DAI, Jing**
**Shenzhen, Guangdong 518129 (CN)**
• **CHEN, Zheng**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
EP-A1- 3 836 685          WO-A1-2018/006237
WO-A1-2019/027262     WO-A1-2019/063819
CN-A- 108 633 070       US-A1- 2019 082 427
US-A1- 2019 149 380     US-A1- 2019 253 986

• **ERICSSON: "Design of PDCCH-based power saving signal/channel", 3GPP TSG-RAN WG1 MEETING #97; R1-1907322, 3RD GENERATION PARTNERSHIP PROJECT (3GPP), SOPHIA-ANTIPOLIS CEDEX ; FRANCE, 13 May 2019 (2019-05-13), Reno, USA; 20190513 - 20190517, XP051728761**
• **PANASONIC: "Discussion on PDCCH-based power saving signal/channel (PoSS)", 3GPP TSG-RAN WG1 MEETING #97. R1-1907363, 3RD GENERATION PARTNERSHIP PROJECT (3GPP), SOPHIA-ANTIPOLIS CEDEX ; FRANCE, 13 May 2019 (2019-05-13), Reno, USA; 20190513 - 20190517, XP051728801**
• **ZTE: "Discussion on PDCCH-based power saving signal", 3GPP TSG RAN WG1 MEETING #97; R1-1907688, 3RD GENERATION PARTNERSHIP PROJECT (3GPP), SOPHIA-ANTIPOLIS CEDEX ; FRANCE, 10 May 2019 (2019-05-10), Reno, USA; 20190513 - 20190517, XP051739975**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This application relates to the field of communications technologies, and in particular, to a method for sending downlink control information DCI, a communications apparatus, and a computer-readable storage medium.

**BACKGROUND**

To reduce power consumption of a terminal device, a power saving signal/channel (power saving signal/channel) may be introduced in a 5th generation mobile communications technology (5th generation, 5G) new radio (new radio, NR) system. The power saving signal may be combined with a discontinuous reception (discontinuous reception, DRX) mechanism in a radio resource control (radio resource control, RRC) connected mode. For a terminal device that supports the power saving signal, a network device may send the power saving signal to the terminal device in a DRX form.

For a design of the power saving signal, a possible solution is a design of multiplexing a physical downlink control channel (physical downlink control channel, PDCCH) in existing NR. To be specific, the power saving signal is designed as a downlink control channel, for example, a PDCCH. The terminal device obtains, by monitoring a corresponding PDCCH, power saving information sent by the network device.

In the current technology, the power saving signal may be a terminal device specific (UE specific) PDCCH, or may be a terminal device group (UE Group) oriented PDCCH. The UE Group oriented PDCCH means that the network device may configure a same Group PDCCH for a group of terminal devices for monitoring. The Group PDCCH carries Group DCI used to indicate corresponding power saving information of each terminal device in the group (for example, whether the terminal device is "woken up"). The Group DCI includes a plurality of information blocks, and each information block may correspond to one terminal device in the group of terminal devices, and includes power saving information of the terminal device.

Because a quantity of bits of information that can be carried in the Group DCI is limited, a quantity of information blocks that can be included in the Group DCI is limited. In some cases, the network device does not need to indicate power saving information of all terminal devices in the group all at once. Therefore, when the network device sends the Group DCI, the Group DCI may indicate only power saving information of some terminal devices in the group. However, current Group DCI always preferentially indicates, according to a preset order, power saving information of terminal devices in the front of the order, which is not conducive for terminal devices in the back of the order to obtain power saving information.

WO 2018/006237 A1 discloses a method for downlink control information (DCI) configuration in a communication system.

US 2019/082427 A1 discloses a communication method for converging a 5th-Generation (5G) communication system for supporting higher data rates beyond a 4th-Generation (4G) system with a technology for Internet of things (IoT).

WO 2019/027262 A1 discloses a method for receiving scheduling information. The method comprises the following steps: receiving Downlink Control Information (DCI); and determining, according to a mapping relationship between configured transmission resources used for a Physical Uplink Shared Channel (PUSCH) and scheduling information in the DCI, scheduling information corresponding to the PUSCH in the DCI.

**SUMMARY**

The invention is set out in the appended set of claims. Embodiments of this application provide a method for sending downlink control information DCI and an apparatus, to enable a group of terminal devices all to have a chance to obtain power saving information in Group DCI, and give full play to a power saving function of a power saving signal.

According to a first aspect, an embodiment of this application provides a method for sending downlink control information DCI. The method may be applied to a network device. The method includes: A network device determines DCI, where the DCI includes indication information and $m_1$ information blocks, the indication information is used to indicate $b_1$ terminal devices in $N$ terminal devices, $m_1 \le b_1 \le N,$ each information block in the $m_1$ information blocks corresponds to one terminal device in the $b_1$ terminal devices, the information block is used to indicate power saving information of a corresponding terminal device, terminal devices to which the $m_1$ information blocks respectively correspond are determined based on the indication information and time domain information of the DCI, and the time domain information of the DCI includes a frame number of a frame in which the DCI is located and/or a slot number of a slot in which the DCI is located; and the network device sends the DCI to the N terminal devices.

By using the technical solution in this embodiment of this application, for the DCI that is sent to the $N$ terminal devices and that includes the power saving information, the network device may determine, based on the $b_1$ terminal devices indicated in the indication information and the time domain information of the DCI, the $m_1$ information blocks carried in the DCI. In this way, a chance for each terminal device in the N terminal devices to obtain the power saving information may be almost equal without much difference, thereby giving full play to a power saving function of a power saving signal.

With reference to the first aspect, in a possible design of the first aspect, the indication information is a first bit sequence; and the network device may further determine a first cyclic shift value based on the time domain information of the DCI, and perform, based on the first cyclic shift value, a cyclic shift on all or a part of the first bit sequence, to determine the terminal devices to which the $m_1$ information blocks respectively correspond. In this way, the terminal devices, determined by the network device from the N terminal devices, respectively corresponding to the $m_1$ information blocks carried in the DCI, may be obtained by performing the cyclic shift on the first bit sequence by using the first cyclic shift value determined based on the time domain information of the DCI. The first bit sequence includes bits corresponding to the N terminal devices, and the time domain information of the DCI has some degree of randomness. Therefore, the terminal devices corresponding to the $m_1$ information blocks are determined according to this method, so that chances for the N terminal devices to obtain the power saving information may be relatively equal.

With reference to the first aspect, in a possible design of the first aspect, the indication information is the first bit sequence, the first bit sequence includes *N* bits, and each bit in the *N* bits corresponds to one terminal device in the N terminal devices.

That the network device performs, based on the first cyclic shift value, a cyclic shift on all or a part of the first bit sequence, to determine the terminal devices to which the $m_1$ information blocks respectively correspond may include: The network device performs, based on the first cyclic shift value, the cyclic shift on the first bit sequence, to obtain a second bit sequence; and the network device determines that a terminal device corresponding to an $i^{th}$ information block in the $m_1$ information blocks is a terminal device corresponding to an $i^{th}$ bit whose value is a first state value in the second bit sequence.

With reference to the first aspect, in a possible design of the first aspect, the first cyclic shift value satisfies:

$$p_1 = \left(\left\lfloor \left(n_f \times N_{slot}^{frame} + n_{s,f}\right)/k_s \right\rfloor\right) mod\ N,$$

$$p_1 = \left(n_f \times N_{slot}^{frame} + n_{s,f}\right) mod\ N,$$

or

$$p_1 = \left(n_f + n_{s,f}\right) mod\ N,$$

where

$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

With reference to the first aspect, in a possible design of the first aspect, the indication information is the first bit sequence, the first bit sequence includes *N* bits, and each bit in the *N* bits corresponds to one terminal device in the N terminal devices.

That the network device performs, based on the first cyclic shift value, a cyclic shift on all or a part of the first bit sequence, to determine the terminal devices to which the $m_1$ information blocks respectively correspond includes: The network device determines a third bit sequence based on the first bit sequence, where the third bit sequence includes $b_1$ bits that are in the N bits and that correspond to the $b_1$ terminal devices; the network device performs, based on the first cyclic shift value, a cyclic shift on the third bit sequence, to obtain a fourth bit sequence; and the network device determines that a terminal device corresponding to an $i^{th}$ information block in the $m_1$ information blocks is a terminal device corresponding to an $i^{th}$ bit in the fourth bit sequence.

With reference to the first aspect, in a possible design of the first aspect, the first cyclic shift value satisfies:

$$p_1 = \left(\left\lfloor \left(n_f \times N_{slot}^{frame} + n_{s,f}\right)/k_s \right\rfloor\right) mod\ b_1,$$

$$p_1 = \left(n_f \times N_{slot}^{frame} + n_{s,f}\right) mod\ b_1,$$

or

$$p_1 = \left(n_f + n_{s,f}\right) mod\ b_1,$$

where

$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

With reference to the first aspect, in a possible design of the first aspect, the DCI can include a maximum of $M_1$ information blocks.

If $b_1$ is less than or equal to $M_1$, $m_1 = b_1$; otherwise, if $b_1$ is greater than $M_1$, $m_1 = M_1$.

With reference to the first aspect, in a possible design of the first aspect, $m_1 = b_1$; and a size of each information block in the $m_1$ information blocks is determined based on a maximum value of a sum of quantities of bits of the information blocks included in the DCI and $b_1$.

With reference to the first aspect, in a possible design of the first aspect, the maximum value of the sum of the quantities of bits of the information blocks included in the DCI is $Z_1$, and the size of each information block in the $m_1$ information blocks satisfies:

$$\beta_1 = min\{\lceil Z_1/m_1\rceil, \beta_{max1}\},$$

or

$$\beta_1 = min\{\lfloor Z_1/m_1\rfloor, \beta_{max1}\},$$

where

$\beta_1$ is a quantity of bits included in each information block in the $m_1$ information blocks, $Z_1$ is the maximum value of the sum of the quantities of bits of the information blocks included in the DCI, $\beta_{max1}$ is a maximum value of the quantity of the bits included in each information block in the $m_1$ information blocks, and $Z_1$ and $\beta_1$ are positive integers.

With reference to the first aspect, in a possible design of the first aspect, an information block includes an index value corresponding to a combination of values of all power saving information fields in at least one power saving information field; and if $\beta_1$ is less than $\beta_{conf}$, a value range of the index value included in the information block includes: the first $2^{\beta_1}$ smallest index values among index values corresponding to all combinations of the values of all power saving information fields.

Alternatively, an information block includes at least one independent power saving information field; and if $\beta_1$ is less than $\beta_{conf}$, the power saving information field included in the information block is determined based on a priority of each power saving information field in the at least one power saving information field, and $\beta_{conf}$ is a quantity of bits that is configured by the network device and that is needed to indicate power saving information of each terminal device.

According to a second aspect, an embodiment of this application provides a method for sending downlink control information DCI. The method may be applied to a terminal device. The method includes: A terminal device receives DCI from a network device, where the DCI includes indication information and $m_1$ information blocks, the indication information is used to indicate $b_1$ terminal devices in $N$ terminal devices, $m_1 \le b_1 \le N$, and the terminal device is one of the $b_1$ terminal devices; and the terminal device determines, based on the indication information and time domain information of the DCI, an information block used to indicate power saving information of the terminal device from the $m_1$ information blocks, where the time domain information includes a frame number of a frame in which the DCI is located and/or a slot number of a slot in which the DCI is located.

For the DCI that is sent to the N terminal devices and that includes the power saving information, the terminal device may determine, based on the $b_1$ terminal devices indicated in the indication information and the time domain information of the DCI, the information block including the power saving information of the terminal device from the $m_1$ information blocks carried in the DCI. Because the network device also determines, according to the same rule, the $m_1$ information blocks carried in the DCI, a chance for the terminal device to obtain the power saving information is almost equal to that of another terminal device in the N terminal devices without much difference, thereby giving full play to a power saving function of a power saving signal.

With reference to the second aspect, in a possible design of the second aspect, the indication information is a first bit sequence; and

that the terminal device determines, based on the indication information and time domain information of the DCI, an information block used to indicate power saving information of the terminal device from the $m_1$ information blocks includes: The terminal device determines a first cyclic shift value based on the time domain information of the DCI; and the terminal device performs, based on the first cyclic shift value, a cyclic shift on all or a part of the first bit sequence, to determine the information block used to indicate the power saving information of the terminal device from the $m_1$ information blocks.

In this way, the terminal device may perform the cyclic shift on the first bit sequence by using the first cyclic shift value determined based on the time domain information of the DCI, to determine whether the information block corresponding to the terminal device is in the $m_1$ information blocks included in the DCI. The first bit sequence includes bits corresponding to the N terminal devices, and the time domain information of the DCI has some degree of randomness. Therefore, the network device determines terminal devices corresponding to the $m_1$ information blocks according to this method, so that chances for the N terminal devices to obtain the power saving information may be relatively equal.

With reference to the second aspect, in a possible design of the second aspect, the indication information is the first bit sequence, the first bit sequence includes N bits, and one bit in the N bits corresponds to the terminal device.

That the terminal device performs, based on the first cyclic shift value, a cyclic shift on all or a part of the first bit sequence, to determine the information block used to indicate the power saving information of the terminal device from the $m_1$ information blocks includes: The terminal device performs, based on the first cyclic shift value, the cyclic shift on the first bit sequence, to obtain a second bit sequence; the terminal device determines that a bit corresponding to the terminal device in the second bit sequence is an $i^{th}$ bit whose value is a first state value; and the terminal device determines that an $i^{th}$ information block in the $m_1$ information blocks is the information block used to indicate the power saving information of the terminal device.

With reference to the second aspect, in a possible design of the second aspect, the first cyclic shift value satisfies:

$$p_1 = \left(\left\lfloor \left(n_f \times N_{slot}^{frame} + n_{s,f}\right)/k_s\right\rfloor\right) mod\ N,$$

$$p_1 = \left(n_f \times N_{slot}^{frame} + n_{s,f}\right) mod\ N,$$

or

$$p_1 = \left(n_f + n_{s,f}\right) mod\ N,$$

where
$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

With reference to the second aspect, in a possible design of the second aspect, the indication information is the first bit sequence, the first bit sequence includes N bits, and one bit in the N bits corresponds to the terminal device.

That the terminal device performs, based on the first cyclic shift value, a cyclic shift on all or a part of the first bit sequence, to determine the information block used to indicate the power saving information of the terminal device from the $m_1$ information blocks includes: The terminal device determines a third bit sequence based on the first bit sequence, where the third bit sequence includes $b_1$ bits that are in the N bits and that correspond to the $b_1$ terminal devices; the terminal device performs, based on the first cyclic shift value, a cyclic shift on the third bit sequence, to obtain a fourth bit sequence; the terminal device determines that a bit corresponding to the terminal device in the fourth bit sequence is an $i^{th}$ bit; and the terminal device determines that an $i^{th}$ information block in the $m_1$ information blocks is the information block used to indicate the power saving information of the terminal device.

With reference to the second aspect, in a possible design of the second aspect, the first cyclic shift value satisfies:

$$p_1 = \left(\left\lfloor \left(n_f \times N_{slot}^{frame} + n_{s,f}\right)/k_s\right\rfloor\right) mod\ b_1,$$

$$p_1 = \left(n_f \times N_{slot}^{frame} + n_{s,f}\right) mod\ b_1,$$

or

$$p_1 = \left(n_f + n_{s,f}\right) mod\ b_1,$$

where
$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

With reference to the second aspect, in a possible design of the second aspect, the DCI can include a maximum of $M_1$ information blocks.

If $b_1$ is less than or equal to $M_1$, $m_1 = b_1$; otherwise, if $b_1$ is greater than $M_1$, $m_1 = M_1$.

With reference to the second aspect, in a possible design of the second aspect, $m_1 = b_1$; and a size of each information block in the $m_1$ information blocks is determined based on a maximum value of a sum of quantities of bits of the information blocks included in the DCI and $b_1$.

With reference to the second aspect, in a possible design of the second aspect, the size of each information block in the $m_1$ information blocks satisfies:

$$\beta_1 = min\{\lceil Z_1/m_1 \rceil, \beta_{max1}\},$$

or

$$\beta_1 = min\{\lfloor Z_1/m_1 \rfloor, \beta_{max1}\},$$

where

$\beta_1$ is a quantity of bits included in each information block in the $m_1$ information blocks, $Z_1$ is the maximum value of the sum of the quantities of bits of the information blocks included in the DCI, $\beta_{max1}$ is a maximum value of the quantity of the bits included in each information block in the $m_1$ information blocks.

With reference to the second aspect, in a possible design of the second aspect, an information block includes an index value corresponding to a combination of values of all power saving information fields in at least one power saving information field; and if $\beta_1$ is less than $\beta_{conf}$ a value range of the index value included in the information block includes: the first $2^{\beta_1}$ smallest index values among index values corresponding to all combinations of the values of all power saving information fields.

Alternatively, an information block includes at least one independent power saving information field; and if $\beta_1$ is less than $\beta_{conf}$, the power saving information field included in the information block is determined based on a priority of each power saving information field in the at least one power saving information field, and $\beta_{conf}$ is a quantity of bits that is configured by the network device and that is needed to indicate power saving information of each terminal device.

According to a third aspect, an embodiment of this application provides a communications apparatus. The communications apparatus has a function of implementing the network device according to any one of the first aspect or the possible designs of the first aspect. The communications apparatus may be a network device, for example, a base station, or may be an apparatus included in a network device, for example, a chip. The function of the foregoing network device may be implemented by hardware, or may be implemented by hardware by executing corresponding software. The hardware or the software includes one or more modules corresponding to the foregoing function.

The communications apparatus may also have a function of implementing the network device according to any one of the second aspect or the possible designs of the second aspect. The communications apparatus may be a terminal device, for example, a handheld terminal device or a vehicle-mounted terminal device, or may be an apparatus included in a terminal device, for example, a chip, or may be an apparatus including the terminal device. The function of the foregoing terminal device may be implemented by hardware, or may be implemented by hardware by executing corresponding software. The hardware or the software includes one or more modules corresponding to the foregoing function.

In a possible design, a structure of the communications apparatus includes a processing module and a transceiver module. The processing module is configured to support the communications apparatus in performing a corresponding function according to any one of the first aspect or the designs of the first aspect, or performing a corresponding function according to any one of the second aspect or the designs of the second aspect. The transceiver module is configured to support communication between the communications apparatus and another communications device. For example, when the communications apparatus is a network device, the communications apparatus may send DCI to N terminal devices. The communications apparatus may further include a storage module. The storage module is coupled to the processing module, and stores program instructions and data that are necessary for the communications apparatus. In an example, the processing module may be a processor, a communications module may be a transceiver, and the storage module may be a memory. The memory may be integrated with the processor, or may be disposed separately from the processor. This is not limited in this application.

In another possible design, a structure of the communications apparatus includes a processor, and may further include a memory. The processor is coupled to the memory, and may be configured to execute computer program instructions stored in the memory, so that the communications apparatus performs the method according to any one of the first aspect or the possible designs of the first aspect, or perform the method according to any one of the second aspect or the possible designs of the second aspect. Optionally, the communications apparatus further includes a communications interface, and the processor is coupled to the communications interface. When the communications apparatus is a terminal device, the communications interface may be a transceiver or an input/output interface. When the communications apparatus is a chip included in a terminal device, the communications interface may be an input/output interface of the chip. Optionally, the transceiver may be a transceiver circuit, and the input/output interface may be an input/output circuit.

According to a fourth aspect, an embodiment of this application provides a computer-readable storage medium. The computer storage medium stores computer-readable instructions. When a computer reads and executes the computer-readable instructions, the computer is enabled to perform the method according to any possible design of the first aspect or the method according to any possible design of the second aspect.

## BRIEF DESCRIPTION OF DRAWINGS

FIG. 1 is a schematic diagram of a network architecture of a communications system to which an embodiment of this application is applicable;

FIG. 2 is a schematic flowchart of a method for sending DCI according to an embodiment of this application;

FIG. 3 is a schematic diagram of a first bit sequence according to an embodiment of this application;

FIG. 4 is a schematic diagram of a structure of a type of DCI according to an embodiment of this application;

FIG. 5 is a schematic diagram of a first implementation of determining terminal devices corresponding to $m_1$ information blocks in DCI according to an embodiment of this application;

FIG. 6 is a schematic diagram of a second implementation of determining terminal devices corresponding to $m_1$ information blocks in DCI according to an embodiment of this application;

FIG. 7a is a schematic flowchart of another method for sending DCI according to an embodiment of this application;

FIG. 7b and FIG. 7c are schematic diagrams of structures of another type of DCI according to an embodiment of this application;

FIG. 8a is a schematic flowchart of another method for sending DCI according to an embodiment of this application;

FIG. 8b and FIG. 8c are schematic diagrams of structures of still another type of DCI according to an embodiment of this application;

FIG. 9 is a schematic diagram of a structure of a communications apparatus according to an embodiment of this application;

FIG. 10 is a schematic diagram of another structure of a communications apparatus according to an embodiment of this application;

FIG. 11 is a schematic diagram of a structure of another communications apparatus according to an embodiment of this application; and

FIG. 12 is a schematic diagram of another structure of a communications apparatus according to an embodiment of this application.

## DESCRIPTION OF EMBODIMENTS

To make objectives, technical solutions, and advantages of embodiments of this application clearer, the following further describes the embodiments of this application in detail with reference to accompanying drawings.

The technical solutions of the embodiments of this application may be used in various communications systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WIMAX) communications system, and a 5th generation (5th generation, 5G) system or a new radio (new radio, NR) system, or is used in a future communications system or another similar communications system.

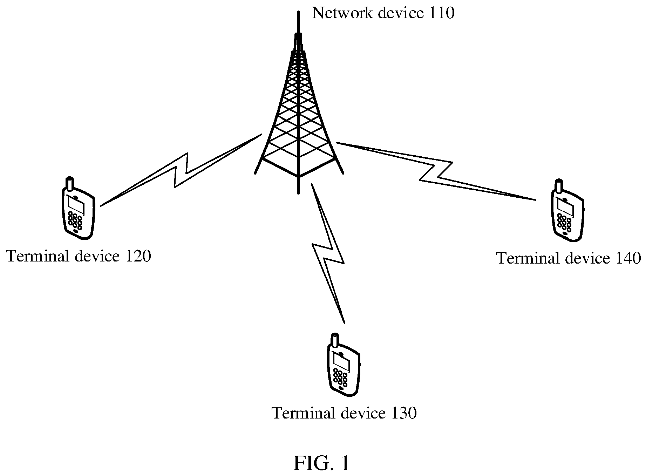

FIG. 1 is a schematic diagram of a network architecture of a communications system to which an embodiment of this application is applicable. The communications system includes a network device 110, a terminal device 120, a terminal device 130, and a terminal device 140. The network device may communicate with at least one terminal device (for example, the terminal device 120) through an uplink (uplink, UL) and a downlink (downlink, DL).

The network device in FIG. 1 may be an access network device, for example, a base station. The access network device corresponds to different devices in different systems. For example, the access network device may correspond to an eNB in a 4th generation mobile communications technology (the 4th generation, 4G) system, and correspond to a 5G access network device, for example, a gNB, in a 5G system. Certainly, the technical solutions provided in the embodiments of this application may also be applied to a future mobile communications system. Therefore, the network device in FIG. 1 may also correspond to an access network device in the future mobile communications system.

Although only the terminal device 120, the terminal device 130, and the terminal device 140 are shown in FIG. 1, it should be understood that the network device may provide a service for a plurality of terminal devices, and a quantity of terminal devices in the communications system is not limited in this embodiment of this application. The network device in FIG. 1 and each of some or all of the plurality of terminal devices may implement the technical solutions provided in the embodiments of this application. In addition, the terminal device in FIG. 1 is described by using a mobile phone as an example. It should also be understood that the terminal device in this embodiment of this application is not limited thereto.

The following explains and describes some terms in the embodiments of this application, to help a person skilled in the art have a better understanding.

(1) The terminal device may also be referred to as user equipment (user equipment, UE), a mobile station (mobile station, MS), a mobile terminal (mobile terminal, MT), or the like, and is a device that provides voice and/or data connectivity for a user. The terminal device may communicate with a core network through a radio access network (radio access network, RAN), and exchange a voice and/or data with the RAN. For example, the terminal device may be a handheld device, a vehicle-mounted device, vehicle user equipment, or the like that has a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

By way of example and not limitation, the terminal device in the embodiments of this application may alternatively be a wearable device. The wearable device may also be referred to as a wearable intelligent device, an intelligent wearable device, or the like, and is a general term of wearable devices, for example, glasses, gloves, watches, clothes, and shoes, that are developed based on intelligent design of daily wearing by using wearable technologies. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

The terminal device in the embodiments of this application may alternatively be a vehicle-mounted module, a vehicle-mounted module group, a vehicle-mounted component, a vehicle-mounted chip, or a vehicle-mounted unit that is built in a vehicle as one or more components or units. The vehicle uses the vehicle-mounted module, the vehicle-mounted module group, the vehicle-mounted component, the vehicle-mounted chip, or the vehicle-mounted unit that is built in the vehicle, to implement the method in this application.

(2) The network device is a device that is in a network and that is configured to connect a terminal device to a wireless network. The network device may be a node in a radio access network, and may also be referred to as a base station, or may be referred to as a radio access network (radio access network, RAN) node (or device). The network device may be configured to: mutually convert a received over-the-air frame and an internet protocol (IP) packet, and serve as a router between the terminal device and a rest part of the access network. The rest part of the access network may include an IP network. The network device may further coordinate attribute management of the air interface. For example, the network device may include an evolved NodeB (NodeB, eNB, or e-NodeB, evolutional Node B) in a long term evolution (long term evolution, LTE) system or an LTE-advanced (LTE-Advanced, LTE-A) system, for example, a conventional macro base station eNB and a micro base station eNB in a heterogeneous network scenario; or may include a next generation NodeB (next generation node B, gNB) in a 5th generation mobile communications technology (5th generation, 5G) new radio (new radio, NR) system; or may further include a transmission reception point (transmission reception point, TRP), a home base station (for example, a home evolved NodeB, or a home Node B, HNB), a baseband unit (base band unit, BBU), a baseband pool BBU pool, a Wi-Fi access point (access point, AP), or the like; or may further include a centralized unit (centralized unit, CU) and a distributed unit (distributed unit, DU) in a cloud radio access network (cloud radio access network, CloudRAN) system. This is not limited in the embodiments of this application. For another example, a network device in a V2X technology is a road side unit (road side unit, RSU). The RSU may be a fixed infrastructure entity supporting a V2X application, and may exchange a message with another entity supporting the V2X application.

(3) Downlink control channel is, for example, a PDCCH or an enhanced physical downlink control channel (enhanced physical downlink control channel, EPDCCH), or may include another downlink control channel. This is not specifically limited.

(4) The terms "system" and "network" may be used interchangeably in the embodiments of this application. "A plurality of" means two or more. In view of this, "a plurality of" may also be understood as "at least two" in the embodiments of this application. "At least one" may be understood as one or more, for example, understood as one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship for describing associated objects and represents that three relationships may exist. For example, A and/or B may represent the following three cases: Only A exists, both A and B exist, and only B exists. In addition, the character "/" usually indicates an "or" relationship between the associated objects.

Unless otherwise stated, ordinal numbers such as "first" and "second" in the embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

**Embodiment 1**

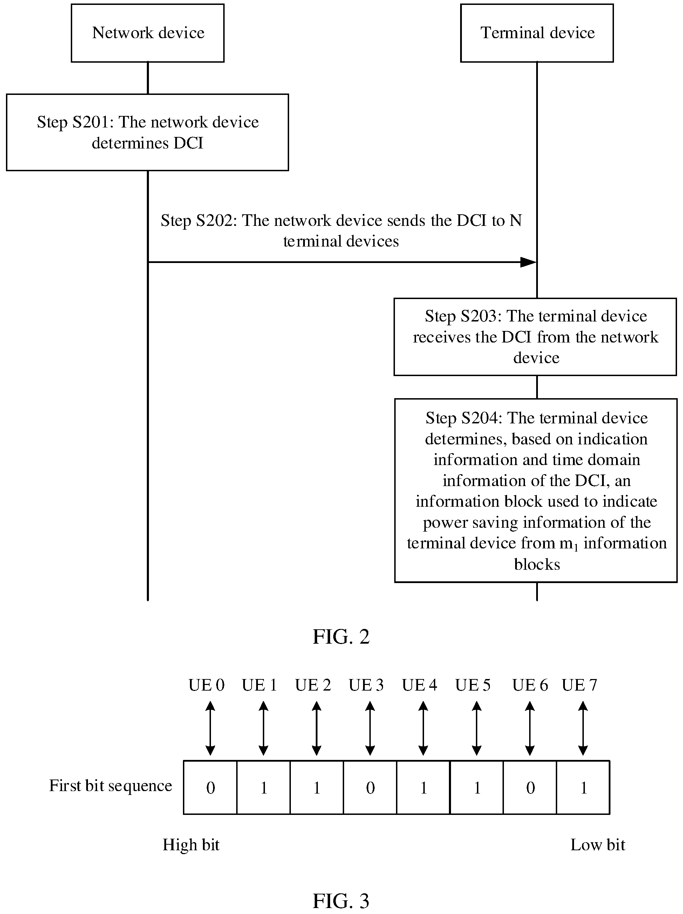

FIG. 2 is a schematic flowchart of a method for sending DCI according to an embodiment of this application. The method specifically includes the following step S201 to step S204.

Step S201: A network device determines DCI, where the DCI includes indication information and $m_1$ information blocks. The DCI may be a power saving signal for $N$ terminal devices, and $N$ is a positive integer. The $N$ terminal devices may belong to one terminal device group. In other words, the DCI is a power saving signal for the terminal device group. The power saving signal may also be referred to as a wake-up signal, or may have another name. This is not specifically limited.

The indication information is used to indicate $b_1$ terminal devices in all N terminal devices included in the group of terminal devices, and the $b_1$ terminal devices specifically refer to terminal devices that need to monitor power saving information in the N terminal devices. Therefore, the indication information may also be understood as pieces of information used to indicate the terminal devices, in the N terminal devices, that need to monitor the power saving information. The indication information may alternatively be referred to as a UE indication field, or a power saving indication field, or a wake-up indication field, or has another name. This is not limited in this application. Herein, $b_1$ is a positive integer, and that $b_1$ is less than or equal to $N$ is satisfied. Because $b_1$ is less than or equal to N, it may be learned that, in the terminal device group that includes the N terminal devices, all or a part of terminal devices need to monitor power saving information.

Step S202: The network device sends the DCI to the N terminal devices.

Step S203: A terminal device receives the DCI from the network device, where the terminal device is one of the foregoing $b_1$ terminal devices.

Step S204: The terminal device determines, based on the indication information and time domain information of the DCI, an information block used to indicate power saving information of the terminal device from the $m_1$ information blocks, where the time domain information includes a frame number of a frame in which the DCI is located and/or a slot number of a slot in which the DCI is located.

The following describes in detail the foregoing steps S201 to S204 and concepts involved in each step.

In this embodiment of this application, the indication information included in the DCI may have a plurality of possible implementations. In a possible design, the indication information may be a first bit sequence, the first bit sequence includes $N$ bits, and each bit corresponds to one terminal device in the $N$ terminal devices. Herein, it may be understood that each bit corresponds to a different terminal device, that is, the N bits are in a one-to-one correspondence with the N terminal devices. Each bit is used to indicate whether a terminal device corresponding to the bit needs to monitor power saving information. Each bit may have two values: a first state value and a second state value. For example, the first state value may be 1, and the second state value may be 0. When a value of one bit is the first state value, it may indicate that a terminal device corresponding to the bit needs to monitor power saving information, that is, the terminal device corresponding to the bit is a terminal device in the foregoing $b_1$ terminal devices. When a value of one bit is the second state value, it may indicate that a terminal device corresponding to the bit does not need to monitor power saving information, that is, the terminal device corresponding to the bit is not in the $b_1$ terminal devices. Therefore, the $b_1$ terminal devices in the N terminal devices may be indicated by using values of the $N$ bits in the first bit sequence. In another possible design, the indication information may be an index of a first bit sequence in a plurality of optional bit sequences, to indirectly indicate the first bit sequence.

It should be understood that the first bit sequence may alternatively be referred to as a first bitmap (bitmap). In actual application, the first state value and the second state value may alternatively be other values. For example, the first state value may be a non-zero value, and the second state value may be 0. This is not limited in this application.

FIG. 3 is a schematic diagram of a first bit sequence according to an embodiment of this application. The first bit sequence includes eight bits, indicating that N=8, that is, the terminal device group includes eight terminal devices. The eight bits are in a one-to-one correspondence with the eight terminal devices. In descending order of bits, the terminal devices corresponding to the eight bits in the first bit sequence are respectively UE 0, UE 1, UE 2, UE 3, UE 4, UE 5, UE 6, and UE 7. Among the eight bits, values of five bits are 1, which are respectively the first bit, the second bit, the fourth bit, the fifth bit, and the seventh bit. Therefore, $b_1$ terminal devices in UE 0 to UE 7 include UE 1, UE 2, UE 4, UE 5, and UE 7, and $b_1$ = 5.

In this embodiment of this application, each information block in the $m_1$ information blocks included in the DCI is used to indicate power saving information of a corresponding terminal device. The power saving information may be one or more pieces of the following information: for example, a bandwidth part identifier (bandwidth part identifier, BWP ID) indication, a same-slot or cross-slot scheduling (cross-slot or same-slot scheduling) indication, a reference signal (reference signal, RS) transmission indication (including an aperiodic channel state information reference signal (channel state information reference signal, CSI-RS), a T (tracking, tracking) RS, and a channel sounding reference signal (sounding reference signal, SRS)), a channel state information (channel state information, CSI) report, a single-carrier or multi-carrier indication (that is, indicating whether the terminal device receives data by using a plurality of carriers), whether the terminal device monitors a PDCCH during DRX activation time duration, whether the UE is "woken up", or the like. Alternatively, the power saving information may be: a CORESET of a PDCCH, a search space set, or a candidate PDCCH that the terminal device needs to monitor or stop monitoring; a monitoring periodicity of the terminal device for a search space set; a PDCCH monitoring periodicity (PDCCH monitoring periodicity) of the terminal device; a time period of PDCCH skipping (PDCCH skipping) by the terminal device; a quantity of receive antennas or a quantity of multiple-input multiple-output (multiple-input multiple-output, MIMO) layers of the terminal device; or a carrier on which the terminal device needs to monitor or stop monitoring a PDCCH (for example, a secondary carrier, which herein may also be referred to as a secondary cell (SCell)).

Each information block in the $m_1$ information blocks corresponds to one terminal device in the $b_1$ terminal devices indicated by the indication information. Herein, it may be understood that each information block corresponds to a different terminal device. $m_1$ is a positive integer, and that $m_1$ is less than or equal to $b_1$ is satisfied, that is, $m_1 \leq b_1 \leq N$. It may be understood that, when $m_1$ is equal to $b_1$, it may indicate that each terminal device in the $b_1$ terminal devices has a corresponding information block in the $m_1$ information blocks included in the DCI, that is, the $m_1$ information blocks are in a one-to-one correspondence with the $b_1$ terminal devices. However, when $m_1$ is less than $b_1$, it may indicate that only some terminal devices in the $b_1$ terminal devices have corresponding information blocks in the $m_1$ information blocks included in the DCI, and the $m_1$ information blocks are in a one-to-one correspondence with some terminal devices in the $b_1$ terminal devices, that is, the DCI includes only power saving information of some terminal devices in the N terminal devices.

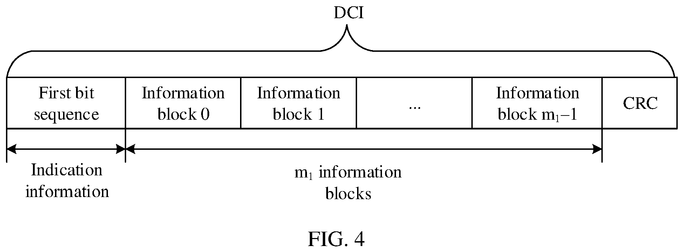

FIG. 4 is a schematic diagram of a structure of a type of DCI according to an embodiment of this application. As shown in FIG. 4, the indication information included in the DCI may be located before the $m_1$ information blocks. Optionally, after the $m_1$ information blocks, the DCI may further include a cyclic redundancy check (cyclic redundancy check, CRC) sequence.

To avoid an excessively large difference in chances for terminal devices in the N terminal devices to obtain the power saving information, in step S201, the network device may perform, based on the indication information in the DCI and the time domain information of the DCI, randomization processing on the $m_1$ information blocks included in the DCI, to generate the DCI. A randomization processing process may also be understood as a process of determining information blocks that are corresponding to terminal devices in the $b_1$ terminal devices and that should be included in the DCI.

Terminal devices to which the $m_1$ information blocks respectively correspond, or a correspondence between the $m_1$ information blocks and the $b_1$ terminal devices may be determined based on the indication information in the DCI and time domain information of the DCI. Herein, the time domain information of the DCI may include the frame number of the frame in which the DCI is located and/or the slot number of the slot in which the DCI is located. In other words, after the DCI is determined, a terminal device, in the $b_1$ terminal devices, corresponding to each information block in the $m_1$ information blocks included in the DCI, and whether each terminal device in the $b_1$ terminal devices has a corresponding information block in the $m_1$ information blocks, and if the corresponding information block exists, the information block, in the $m_1$ information blocks, specifically corresponding to the terminal device may all be determined based on the indication information in the DCI and the time domain information of the DCI.

Specifically, a process in which the network device determines the DCI, or a process in which the network device performs randomization processing on the $m_1$ information blocks may include: The network device determines a first cyclic shift value based on the time domain information of the DCI, and then performs, based on the first cyclic shift value, a cyclic shift on all or a part of the first bit sequence, to determine the terminal devices to which the $m_1$ information blocks respectively correspond. This process may also have the following two possible implementations.

In the first possible implementation:

The indication information in the DCI is the first bit sequence, and the network device may perform, based on the first cyclic shift value, the cyclic shift on the first bit sequence, to obtain a second bit sequence; and further determine that a terminal device corresponding to an $i^{th}$ information block in the $m_1$ information blocks included in the DCI is a terminal device corresponding to an $i^{th}$ bit whose value is the first state value in the second bit sequence.

It should be understood that the second bit sequence is obtained by performing the cyclic shift on the first bit sequence, the second bit sequence also includes N bits, and a $q_i{}^{th}$ bit in the second bit sequence is a $q_j{}^{th}$ bit in the first bit sequence, where $q_i$ and $q_j$ satisfy a relationship: $q_j = (q_i - 1 + p_1) \bmod N + 1$, and $p_1$ is the first cyclic shift value.

Although the cyclic shift is performed on the first bit sequence, a cyclic shift process does not change a terminal device corresponding to each bit. In other words, a terminal device corresponding to the $q_i{}^{th}$ bit in the first bit sequence is the same as a terminal device corresponding to the $q_i{}^{th}$ bit in the second bit sequence obtained after the cyclic shift. In addition, the cyclic shift does not change a meaning represented by a value of each bit. In the second bit sequence, a terminal device corresponding to a bit whose value is the first state value still indicates that the terminal device belongs to the foregoing $b_1$ terminal devices that need to monitor the power saving information.

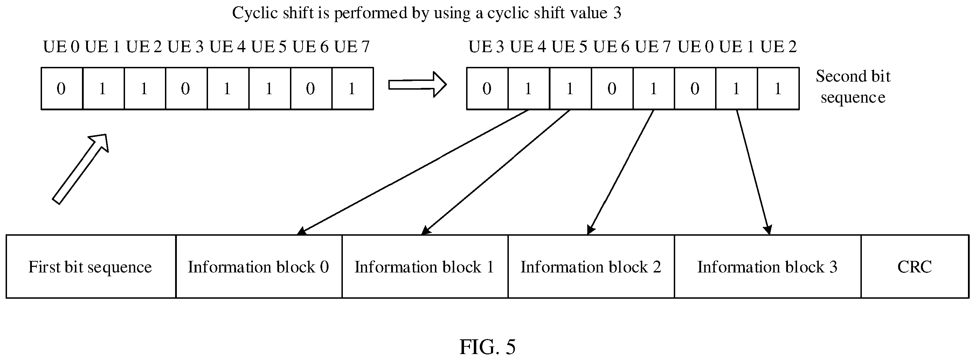

FIG. 5 shows, in the first possible implementation, an example of a process in which the network device determines the terminal devices corresponding to the $m_1$ information blocks in DCI. In the example shown in FIG. 5, the first bit sequence is 01101101, and the first cyclic shift value is 3. Bits in the first bit sequence correspond to terminal devices UE 0, UE 1, UE 2, UE 3, UE 4, UE 5, UE 6, and UE 7 in descending order of bits. The cyclic shift on the first bit sequence 01101101 is performed by using the first cyclic shift value 3, to obtain the second bit sequence 01101011. Bits in the second bit sequence correspond to terminal devices UE 3, UE 4, UE 5, UE 6, UE 7, UE 0, UE 7, and UE 2 in descending order of bits.

In this way, based on that a terminal device corresponding to an $i^{th}$ information block in the $m_1$ information blocks is a terminal device corresponding to an $i^{th}$ bit whose value is the first state value in the second bit sequence, it may be learned that if $m_1$=4, the four information blocks included in the DCI are respectively information blocks corresponding to the UE 4, the UE 5, the UE 7, and the UE 1.

In the first implementation, the first cyclic shift value may be determined according to any one of the following manners:

$$p_1 = \left( \left\lfloor \left( n_f \times N_{slot}^{frame} + n_{s,f} \right) / k_s \right\rfloor \right) \bmod N,$$

$$p_1 = \left( n_f \times N_{slot}^{frame} + n_{s,f} \right) \bmod N,$$

or

$$p_1 = \left( n_f + n_{s,f} \right) \bmod N,$$

where

$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

It should be noted that, in the first implementation, a total quantity of bits of information blocks that can be accommodated in the DCI is fixed, and a quantity of bits of information that can be accommodated in each information block is also fixed. Therefore, a total quantity of information blocks that can be included in the DCI is also fixed.

It is assumed that the DCI can include a maximum of $M_1$ information blocks, where $M_1$ is a positive integer. In this embodiment of this application, the quantity $b_1$ of terminal devices that need to monitor the power saving information and that are indicated by the network device by using the indication information in the DCI may be less than or equal to $M_1$, or may be greater than or equal to $M_1$.

When $b_1$ is less than or equal to $M_1$, $m_1 = b_1 \leq M_1$. It indicates that the quantity $m_1$ of information blocks included in the DCI is equal to the quantity $b_1$ of terminal devices that need to monitor the power saving information and that are indicated by using the indication information of the DCI. In this case, the $b_1$ terminal devices that need to monitor the power saving information and that are indicated in the indication information of the DCI all have corresponding information blocks in the $m_1$ information blocks included in the DCI.

When $b_1$ is greater than $M_1$, $m_1 = M_1 \leq b_1$. It indicates that the $M_1$ information blocks are actually included in the DCI, which reaches an upper limit of the quantity of information blocks that can be accommodated in the DCI. Because the quantity $b_1$ of terminal devices that need to monitor the power saving information and that are indicated in the indication information of the DCI is greater than a quantity $M_1$ of information blocks actually included in the DCI, some terminal devices in the $b_1$ terminal devices that are indicated in the indication information of the DCI may have no corresponding information blocks in the $M_1$ information blocks included in the DCI,
for example, the UE 2 shown in FIG. 5. Although a value of a bit corresponding to the UE 2 in the second bit sequence is 1, the UE 2 does not have a corresponding information block in the DCI because the bit corresponding to the UE 2 is a fifth bit whose value is 1 in the second bit sequence, and the DCI includes only a maximum of four information blocks.

If a terminal device belongs to the $b_1$ terminal devices that need to monitor the power saving information, but the DCI does not include an information block corresponding to the terminal device, the terminal device may use power saving information in a default configuration. For example, the network device may preconfigure some values of power saving information for the terminal device by using higher layer signaling, which is referred to as the default configuration (default configuration).

It should be noted that in this embodiment of this application, a size of the DCI may change semi-statically, and the terminal device usually monitors the DCI based on a same size. If the quantity $m_1$ of information blocks actually included in the DCI is less than the maximum quantity $M_1$ of information blocks that can be included in the DCI, some padding bits (padding bits) may further exist in the DCI, which is not shown in FIG. 4.

In the second possible implementation:
The indication information is the first bit sequence, and the network device may determine a third bit sequence based on the first bit sequence, where the third bit sequence includes $b_1$ bits that are in the N bits of the first bit sequence and that correspond to the $b_1$ terminal devices; the network device performs, based on the first cyclic shift value, a cyclic shift on the third bit sequence, to obtain a fourth bit sequence; and the network device determines that a terminal device corresponding to an $i^{th}$ information block in the $m_1$ information blocks included in the DCI is a terminal device corresponding to an $i^{th}$ bit in the fourth bit sequence.

It should be understood that the $b_1$ bits corresponding to the $b_1$ terminal devices in the first bit sequence are $b_1$ bits whose values are first state values in the first bit sequence. Each bit in the $b_1$ bits is used to indicate that a corresponding terminal device needs to monitor power saving information. The third bit sequence is obtained by extracting the $b_1$ bits whose values are the first state values in the first bit sequence. It may be said that the third bit sequence is a part of the first bit sequence. A terminal device corresponding to each bit in the third bit sequence is still the same as a terminal device corresponding to the bit in the first bit sequence. In addition, each bit in the $b_1$ bits included in the third bit sequence is used to indicate that a corresponding terminal device needs to monitor power saving information.

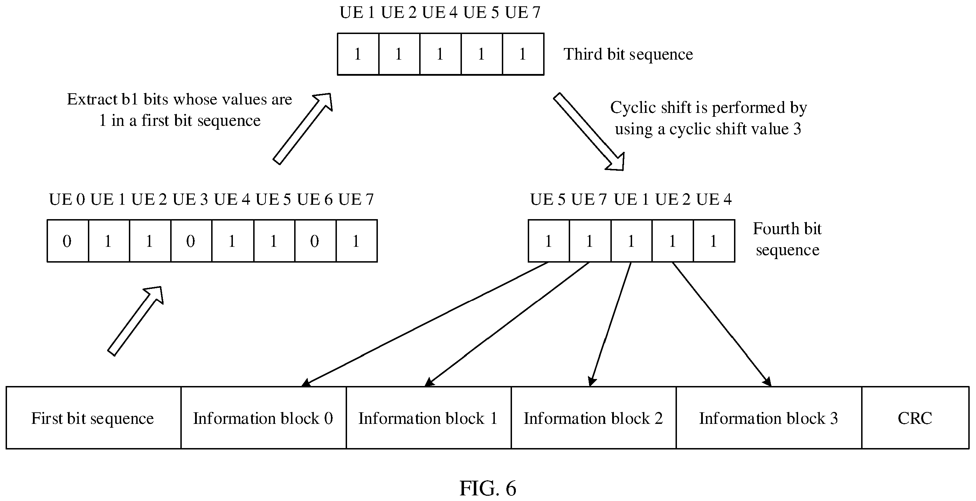

FIG. 6 shows, in the second possible implementation, an example of a process in which the network device determines the terminal devices corresponding to the $m_1$ information blocks in DCI. In the example shown in FIG. 6, the first bit sequence is 01101101, and terminal devices corresponding to the bits in the first bit sequence are UE 0, UE 1, UE 2, UE 3, UE 4, UE 5, UE 6, and UE 7 in descending order of bits. The first bit sequence includes five bits whose values are 1, so that $b_1$ = 5. By extracting the bits whose values are 1 in the first bit sequence, the third bit sequence 11111 may be obtained. Terminal devices corresponding to the bits in the third bit sequence are UE 1, UE 2, UE 4, UE 5, and UE 7 in descending order of bits.

Next, the cyclic shift on the third bit sequence is performed by using the first cyclic shift value 3, to obtain the fourth bit sequence 11111. Although the fourth bit sequence appears to be the same as the third bit sequence, terminal devices corresponding to bits in the fourth bit sequence are different from that corresponding to the bits in the third bit sequence. The terminal devices corresponding to the bits in the fourth bit sequence are UE 5, UE 7, UE 1, UE 2, and UE 4 in descending order of bits.

Based on that a terminal device corresponding to an $i^{th}$ information block in the $m_1$ information blocks is a terminal device corresponding to an $i^{th}$ bit in the fourth bit sequence, it may be learned that if $m_1$=4, the four information blocks included in the DCI are respectively information blocks corresponding to the UE 5, the UE 7, the UE 1, and the UE 2.

In the second implementation, the first cyclic shift value may be determined according to any one of the following manners:

$$p_1 = \left(\left\lfloor \left(n_f \times N_{slot}^{frame} + n_{s,f}\right)/k_s \right\rfloor\right) mod\ b_1,$$

$$p_1 = \left(n_f \times N_{slot}^{frame} + n_{s,f}\right) mod\ b_1,$$

or

$$p_1 = \left(n_f + n_{s,f}\right) mod\ b_1,\ '$$

where
$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

It should be noted that, in the second implementation, a quantity of bits of information that can be accommodated in each information block included in the DCI may be fixed or may be flexibly set. Because a total quantity of bits of information blocks that can be accommodated in the DCI is fixed, if the quantity of bits of the information that can be accommodated in each information block is also fixed, a total quantity of information blocks that can be included in the DCI, similar to that in the first implementation, is also fixed, for example, may be $M_1$. In this case, there may also be a case in which a terminal device belongs to the $b_1$ terminal devices that need to monitor the power saving information and that are indicated in the indication information in the DCI, but the DCI does not include an information block corresponding to the terminal device, and the terminal device needs to use power saving information in a default configuration.

If the quantity of bits of the information that can be accommodated in each information block included in the DCI can be flexibly set, the network device may determine a size of each information block based on the total quantity of bits of the information blocks that can be accommodated in the DCI and a quantity $b_1$ of terminal devices that need to monitor the power saving information. In this case, a quantity $m_1$ of information blocks included in the DCI is equal to the quantity $b_1$ of terminal devices that need to monitor the power saving information, that is, $m_1 = b_1$, and the $m_1$ information blocks are in a one-to-one correspondence with the $b_1$ terminal devices. In other words, the $b_1$ terminal devices that are indicated in the indication information in the DCI all have corresponding information blocks in the $m_1$ information blocks included in the DCI.

Specifically, it is assumed that a maximum value of a sum of quantities of bits of the information blocks included in the DCI is $Z_1$, each information block in the $m_1$ information blocks includes $\beta_1$ bits, and $\beta_1$ satisfies the following relationship:

$$\beta_1 = min\{\lceil Z_1/m_1 \rceil, \beta_{max1}\},$$

or

$$\beta_1 = min\{\lfloor Z_1/m_1 \rfloor, \beta_{max1}\},$$

where

$\beta_{max1}$ is a maximum value of a quantity of bits included in each information block in the $m_1$ information blocks, and $Z_1$ and $\beta_1$ are positive integers.

On this basis, if the quantity $\beta_1$ of the bits included in each information block obtained by using the foregoing manner is less than $\beta_{conf}$, and $\beta_{conf}$ means a quantity of bits that is configured by the network device and that is needed to indicate power saving information of each terminal device, the following processing may be performed based on an indication manner of power saving information in an information block.

Case 1: If the power saving information in the information block is indicated in a joint coding manner, each information block includes an index value corresponding to a combination of values of all power saving information fields in at least one power saving information field. In this case, if $\beta_1$ is less than $\beta_{conf}$, a value range of the index value included in the information block includes: the first $2^{\beta_1}$ smallest index values among index values corresponding to all combinations of the values of all power saving information fields.

For example, power saving information of a terminal device includes four power saving information fields: a BWP ID (2 bits), a cross-slot scheduling indication (1 bit), a trigger RS resource (2 bits), and a carrier transmission indication (single-carrier or multi-carrier) (1 bit). In addition, the quantity $\beta_{conf}$ of bits that is configured by the network device and that is needed to indicate the power saving information of each terminal device is 3 bits. In this case, meanings of state values of the 3 bits are shown in Table 1.

**Table 1: State value combinations of power saving information fields included in each state value of power saving information**

| State value | Corresponding combination of state values of the power saving information fields |
|---|---|
| 000 | BWP ID="00", cross-slot scheduling indication="0", trigger RS resource indication="00", carrier transmission indication="0" |
| 001 | BWP ID="11", cross-slot scheduling indication="1", trigger RS resource indication="11", carrier transmission indication="1" |
| 010 | BWP ID="10", cross-slot scheduling indication="1", trigger RS resource indication="01", carrier transmission indication="0" |

(continued)

| State value | Corresponding combination of state values of the power saving information fields |
|---|---|
| 011 | BWP ID="11", cross-slot scheduling indication="0", trigger RS resource indication="00", carrier transmission indication="0" |
| ... | ... |
| 111 | BWP ID="11", cross-slot scheduling indication="1", trigger RS resource indication="11", carrier transmission indication="1" |

If the quantity $\beta_1$ of the bits included in each information block obtained by calculation is less than $\beta_{conf}$, the information block indicates a state value combination of power saving information fields corresponding to $2^{\beta_1}$ state values with smaller values among $2^{\beta_{conf}}$ state values of power saving information bits. If the quantity of the bits in the information block $\beta_1 = 2$, meanings of state values of the two bits in the information block are shown in Table 2, that is, the first four rows of Table 1 are taken.

**Table 2: State value combinations of power saving information fields corresponding to each state value in an information block**

| State value | Corresponding combination of state values of the power saving information fields |
|---|---|
| 00 | BWP ID="00", cross-slot scheduling indication="0", trigger RS resource indication="00", carrier transmission indication="0" |
| 01 | BWP ID="11", cross-slot scheduling indication="1", trigger RS resource indication="11", carrier transmission indication="1" |
| 10 | BWP ID="10", cross-slot scheduling indication="1", trigger RS resource indication="01", carrier transmission indication="0" |
| 11 | BWP ID="11", cross-slot scheduling indication="0", trigger RS resource indication="00", carrier transmission indication="0" |

Case 2: If the power saving information in the information block is indicated in a manner of an independent power saving information field, each information block includes at least one independent power saving information field. In this case, if $\beta_1$ is less than $\beta_{conf}$, a power saving information field included in each information block may be determined based on a priority of each power saving information field in the at least one power saving information field. A power saving information field not included in the information block due to a low priority may use a "default configuration".

For example, each information block includes four power saving information fields: a BWP ID (2 bits), a cross-slot scheduling indication (1 bit), a trigger RS resource (2 bits), and a carrier transmission indication (single-carrier or multi-carrier) (1 bit). Priorities of the four power saving information fields are in descending order. If $\beta_1 = 3$, and $\beta_{conf} = 6$, the information block includes two power saving information fields: the BWP ID and the cross-slot scheduling indication.

In step S203 and step S204, the terminal device may receive the DCI from the network device, and then determine, based on the indication information in the DCI and the time domain information of the DCI, the information block used to indicate the power saving information of the terminal device from the $m_1$ information blocks included in the DCI. The terminal device may determine, in a manner similar to that of the network device, whether there is the information block corresponding to the terminal device in the $m_1$ information blocks. If there is the corresponding information block, a specific information block corresponding to the terminal device is not described herein again.

**Embodiment 2**

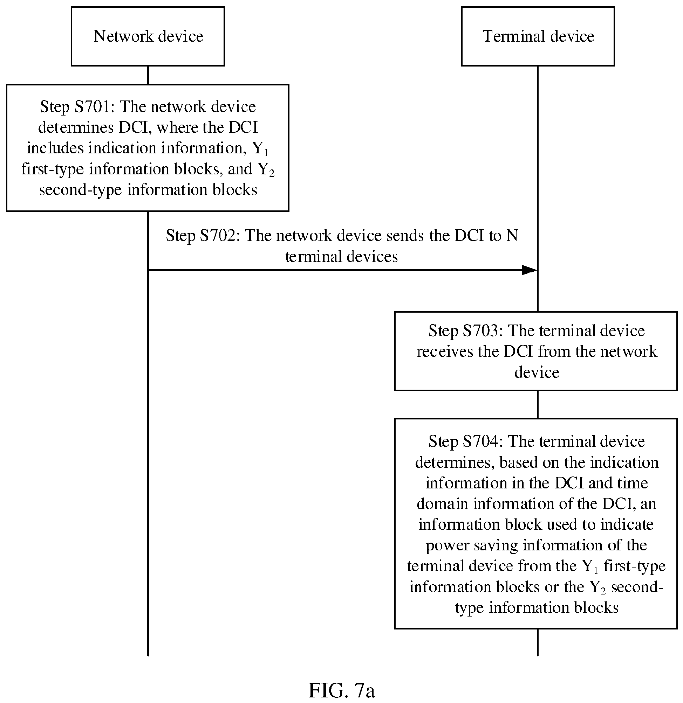

The following describes another method for sending DCI according to an embodiment of this application with reference to FIG. 7a to FIG. 7c.

FIG. 7a is a schematic flowchart of another method for sending DCI according to an embodiment of this application. The method includes the following step S701 to step S704.

Step S701: A network device determines DCI, where the DCI includes indication information, $Y_1$ first-type information blocks, and $Y_2$ second-type information blocks. The DCI may be a power saving signal for N terminal devices, and $N$ is a positive integer. The $N$ terminal devices may belong to one terminal device group. In other words, the DCI is a power saving signal for the terminal device group. The power saving signal may be referred to as a wake-up signal, or may have another name. This is not specifically limited.

The indication information is used to indicate whether each terminal device in the N terminal devices is woken up. In a possible design, the indication information may be a first bit sequence, and the first bit sequence may alternatively be referred to as a first bitmap (bitmap). The first bit sequence includes N bits, and each bit corresponds to one terminal device in the N terminal devices. Herein, it may be understood that each bit corresponds to a different terminal device, that is, the $N$ bits are in a one-to-one correspondence with the $N$ terminal devices. Each bit is used to indicate whether a corresponding terminal device is woken up. Specifically, each bit may have two values: a first state value and a second state value. When a value of a bit is the first state value, it may indicate that a terminal device corresponding to the bit is woken up. When a value of a bit is the second state value, it may indicate that a terminal device corresponding to the bit is not woken up. Optionally, the first state value may be 1, and the second state value may be 0. Alternatively, the first state value may be a non-zero value, and the second state value may be 0. Alternatively, the first state value may be 0, and the second state value may be 1. Alternatively, the first state value may be 0, and the second state value may be a non-zero value. Alternatively, the first state value and the second state value may be other values. This is not limited in this application. In another possible design, the indication information may alternatively be an index corresponding to a first bit sequence, to indirectly indicate the first bit sequence. It should be understood that the indication information may alternatively be referred to as a UE indication field, a power saving indication field, or a wake-up indication field, or may have another name. This is not limited in this application. Meanings of the indication information, an information block, power saving information, and the like described herein, and a correspondence between the indication information, the information block, and the power saving information, and a terminal device are similar to those of related terms in Embodiment 1, and are not described again.

The first-type information blocks are used to indicate power saving information of terminal devices that are woken up. A size of each first-type information block is $B_1$ bits. The second-type information blocks are used to indicate power saving information of terminal devices that are not woken up. A size of each second-type information block is $B_2$ bits. Herein, $Y_1$, $Y_2$, $B_1$, and $B_2$ are all positive integers. In addition, $B_1$ is not equal to $B_2$, for example, $B_1$ may be greater than $B_2$. In this way, the $Y_1$ first-type information blocks of the terminal devices that are woken up include $Y_1 \times B_1$ bits in total, and the $Y_2$ second-type information blocks of the terminal devices that are not woken up include $Y_2 \times B_2$ bits in total. If the indication information is the first bit sequence, the DCI may include N + $Y_1 \times B_1$ + $Y_2 \times B_2$ bits in total.

The power saving information of the terminal devices that are woken up may include at least one of the following items: a BWP after being woken up, a minimum slot offset parameter, triggering aperiodic CSI measurement and reporting, triggering aperiodic SRS sending, a search space set (search space set) activated after being woken up, and a carrier on which PDCCH monitoring (PDCCH monitoring) is performed after being woken up.

The power saving information of the terminal devices that are not woken up may include at least one of the following items: a quantity of DRX cycles for skipping PDCCH monitoring, and whether to send a CSI report of periodic/semi-persistent scheduling (semi-persistent scheduling, SPS), or an SRS indication of periodic/SPS in corresponding ON duration.

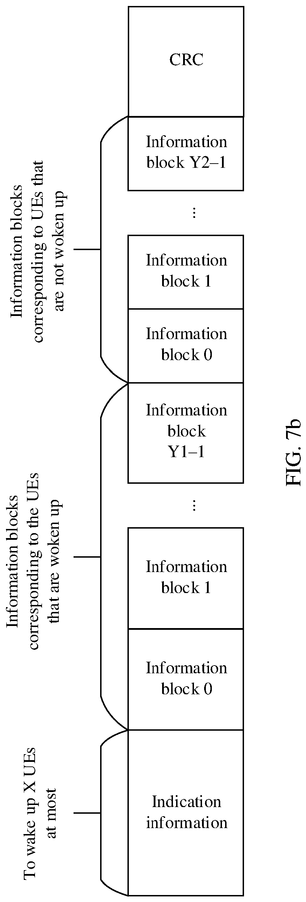

As shown in FIG. 7b, in the DCI, the $Y_1$ first-type information blocks may be continuously arranged, and the $Y_2$ second-type information blocks may also be continuously arranged. The indication information is located before the $Y_1$ first-type information blocks and the $Y_2$ second-type information blocks, and a CRC sequence is located after the $Y_1$ first-type information blocks and the $Y_2$ second-type information blocks. Optionally, the $Y_1$ first-type information blocks may be arranged before the $Y_2$ second-type information blocks. Alternatively, the $Y_2$ second-type information blocks may be arranged before the $Y_1$ first-type information blocks. This is not limited in this application. This may be understood as that: The DCI includes two indication fields of information blocks, namely, a first-type information block indication field and a second-type information block indication field, where the first-type information block indication field includes the $Y_1$ first-type information blocks, each of the first-type information blocks has a same size, the second-type information block indication field includes the $Y_2$ second-type information blocks, and each of the second-type information blocks has a same size.

It should be noted that $Y_1 + Y_2 \le N$. In other words, the information blocks in the DCI may not indicate power saving information of all terminal devices in the N terminal devices. Some of the terminal devices that are woken up or the terminal devices that are not woken up may not have corresponding information blocks in the DCI. In this case, a terminal device that is indicated to be woken up but does not have a corresponding information block may be woken up in a default wake-up manner, and a terminal device that is indicated not to be woken up but does not have a corresponding information block may continue to sleep (that is, not to be woken up) in a default non-wake-up manner. Optionally, the network device may indicate, by sending an RRC message to a terminal device, the default wake-up manner and/or the non-wake-up manner. The default wake-up manner may include one or more pieces of the following information of the terminal device that is indicated to be woken up but does not have the corresponding information block: a BWP after being woken up, a minimum slot offset parameter, trigger aperiodic CSI measurement and reporting, trigger aperiodic SRS sending, a search space set (search space set) activated after being woken up, and a carrier on which PDCCH monitoring (PDCCH monitoring) is performed after being woken up. The default non-wake-up manner may include one or more pieces of the following information of the terminal device that is indicated not to be woken up and does not have the corresponding information block: a quantity of DRX cycles for skipping PDCCH monitoring, and whether to send a CSI report of periodic/SPS, or an SRS indication of periodic/SPS in corresponding ON duration.

Specifically, in step S701, the network device may determine a value of the indication information in the DCI based on terminal devices that need to be woken up and terminal devices that do not need to be woken up in the N terminal devices. It may be understood that determining the indication information herein is equivalent to determining the first bit sequence. For example, a bit corresponding to a terminal device that needs to be woken up in the first bit sequence may be set to 1, and a bit corresponding to a terminal device that does not need to be woken up may be set to 0, to obtain the first bit sequence.

Similar to the manner in Embodiment 1, when the indication information is the first bit sequence, the network device may determine, based on the first bit sequence, a fifth bit sequence formed by bits corresponding to the terminal devices that are woken up and a sixth bit sequence formed by bits corresponding to the terminal devices that are not woken up.

Further, the network device may determine a second cyclic shift value and a third cyclic shift value based on time domain information of the DCI, perform a cyclic shift on the fifth bit sequence based on the second cyclic shift value, to obtain a seventh bit sequence, and perform a cyclic shift on the sixth bit sequence based on the third cyclic shift value, to obtain an eighth bit sequence. The time domain information of the DCI may include a frame number of a frame in which the DCI is located and/or a slot number of a slot in which the DCI is located.

The second cyclic shift value satisfies $F_2 = \mathrm{mod}\left(a_1 * SFN + b_1 * n_{s,f}^{\mu}, Y_1\right)$, where $F_2$ is the second cyclic shift value, $SFN$ is a system frame number (system frame number, SFN) of the frame in which the DCI is located, $n_{s,f}^{\mu}$ is the slot number of the slot in which the DCI is located, $Y_1$ is a quantity of the first-type information blocks included in the DCI, and $a_1$ and $b_1$ are integers predefined in a protocol, and cannot be 0 at the same time.

The third cyclic shift value satisfies $F_3 = \mathrm{mod}\left(a_2 * SFN + b_2 * n_{s,f}^{\mu}, Y_2\right)$, where $F_3$ is the third cyclic shift value, $SFN$ is the system frame number (system frame number, SFN) of the frame in which the DCI is located, $n_{s,f}^{\mu}$ is the slot number of the slot in which the DCI is located, $Y_2$ is a quantity of the second-type information blocks included in the DCI, and $a_2$ and $b_2$ are integers predefined in the protocol, and cannot be 0 at the same time.

Further, the network device may map power saving information of a terminal device corresponding to an $i^{th}$ bit in the seventh bit sequence to an $i^{th}$ information block in the $Y_1$ first-type information blocks, and map power saving information of a terminal device corresponding to an $i^{th}$ bit in the eighth bit sequence to an $i^{th}$ information block in the $Y_2$ second-type information blocks, so as to determine the $Y_1$ first-type information blocks and the $Y_2$ second-type information blocks included in the DCI, that is, determine a correspondence between the $Y_1$ first-type information blocks and the $Y_2$ second-type information blocks in the DCI and the N terminal devices.

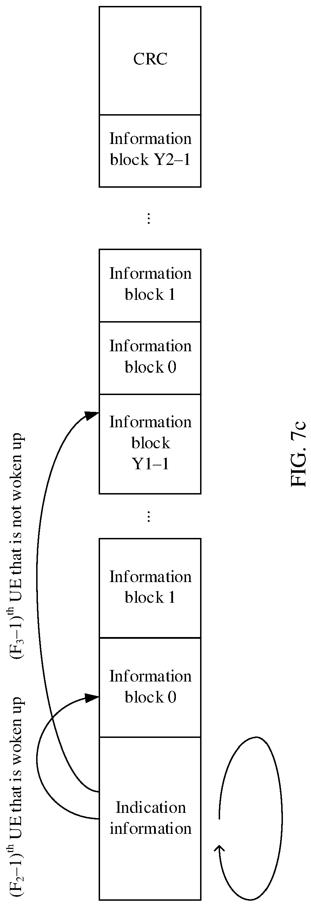

As shown in FIG. 7c, for information blocks corresponding to the terminal devices that are woken up, an $(F_2$ - 1$)^{th}$ terminal device that is woken up is mapped to an information block 0, an $F_2^{th}$ terminal device that is woken up is mapped to an information block 1, and so on. If an unmapped information block still exists in the $Y_1$ information blocks after a terminal device of a least significant bit that is woken up is mapped to an information block, mapping continues from the $0^{th}$ terminal device of a most significant bit. If a quantity of all the terminal devices that are woken up is less than $Y_1$, zeros are added to remaining unmapped information blocks.

Similarly, for information blocks corresponding to the terminal devices that are not woken up, an $(F_3$ - 1$)^{th}$ terminal device that is woken up is mapped to an information block 0, an $F_3^{th}$ terminal device that is woken up is mapped to an information block 1, and so on. If an unmapped information block still exists in the $Y_2$ information blocks after a terminal device of a least significant bit that is woken up is mapped to an information block, mapping continues from the $0^{th}$ terminal device of a most significant bit. If the quantity of all the terminal devices that are woken up is less than $Y_2$, zeros are added to remaining unmapped information blocks.

Step S702: The network device sends the DCI to the N terminal devices.

Step S703: A terminal device receives the DCI from the network device, where the terminal device is one of the foregoing N terminal devices.

Step S704: The terminal device determines, based on the indication information in the DCI and the time domain information of the DCI, an information block used to indicate power saving information of the terminal device from the $Y_1$ first-type information blocks or the $Y_2$ second-type information blocks.

The terminal device may determine, based on the indication information in the DCI and a location of a corresponding bit in the first bit sequence, whether to be woken up. If the bit corresponding to the terminal device in the first bit sequence is the first state value, the terminal device may determine that the terminal device needs to wake up. Further, the terminal device may determine the second cyclic shift value in a manner the same as that of the network device, determine, based on the second cyclic shift value, the information block corresponding to the terminal device from the $Y_1$ first-type information blocks, and wake up based on an indication of the power saving information in the corresponding information block. If the $Y_1$ first-type information blocks do not include the information block corresponding to the terminal device, the terminal device wakes up in a default wake-up manner.

If the bit corresponding to the terminal device in the first bit sequence is the second state value, the terminal device may determine that the terminal device does not need to wake up. Further, the terminal device may determine the third cyclic shift value in a manner the same as that of the network device, determine, based on the third cyclic shift value, the information block corresponding to the terminal device from the $Y_2$ second-type information blocks, and continue to sleep (that is, do not wake up) based on an indication of the power saving information in the corresponding information block. If the $Y_2$ second-type information blocks do not include the information block corresponding to the terminal device, the terminal device continues to sleep in a default non-wake-up manner.

In this embodiment of this application, the network device may further send an RRC message to the terminal device, where the RRC message indicates the location of the corresponding bit, in the first bit sequence, corresponding to the terminal device, and the quantity $Y_1$ of the first-type information blocks and the quantity $Y_2$ of the second-type information blocks that are included in the DCI, so that the terminal device determines whether to be woken up and the second cyclic shift value and/or the third cyclic shift value.

Optionally, the RRC message may be used to indicate one or more pieces of the following information configured for the terminal device:

- a time-frequency resource for monitoring the DCI;
- a radio network temporary identifier (radio network temporary indication, RNTI) used to scramble the CRC of the DCI, where the RNTI may be, for example, a power saving (power saving, PS)-RNTI;
- a quantity N of terminal devices indicated in the indication information of the DCI, the quantity $Y_1$ of first-type information blocks included in the DCI, the size $B_1$ of each first-type information block, the quantity $Y_2$ of the second-type information blocks included in the DCI, and the size $B_2$ of each second-type information block;
- the location of the corresponding bit, in the first bit sequence, corresponding to the terminal device;
- one or more parameters indicated in the power saving information of the terminal device that is woken up; and
- one or more parameters indicated in the power saving information of the terminal device that is not woken up.

It can be learned from the foregoing content that, according to the method for sending DCI, the network device may separately randomize the terminal devices that are woken up and the terminal devices that are not woken up. In this way, no matter whether each terminal device is woken up or not, there is a fair chance to obtain power saving information, thereby giving full play to a power saving function of a power saving signal.

**Embodiment 3**

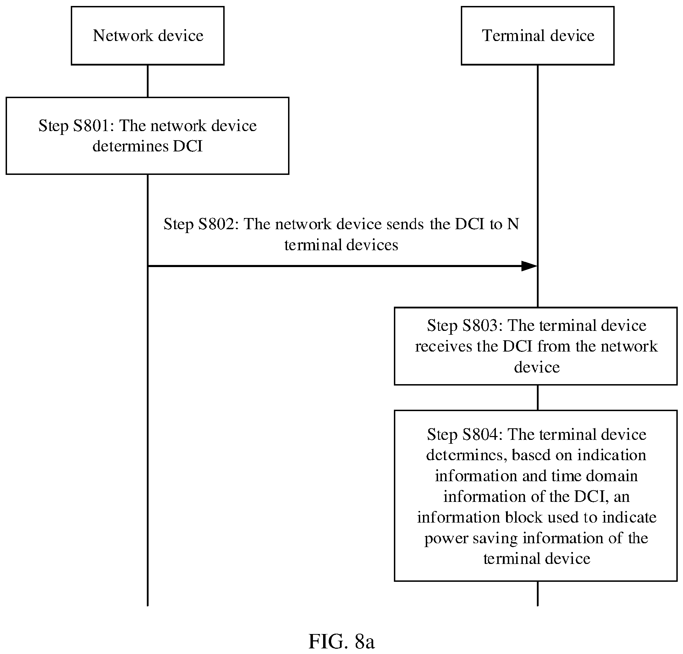

The following describes still another method for sending DCI according to an embodiment of this application with reference to FIG. 8a to FIG. 8c.

FIG. 8a is a schematic flowchart of still another method for sending DCI according to an embodiment of this application. The method includes the following step S801 to step S804.

Step S801: A network device determines DCI, where the DCI includes indication information, $Y_1$ first-type information blocks, and $Y_2$ second-type information blocks.

Specifically, in step S801, the network device may determine a value of the indication information in the DCI based on terminal devices that need to be woken up and terminal devices that do not need to be woken up in *N* terminal devices. It may be understood that determining the indication information herein is equivalent to determining a first bit sequence. For example, a bit corresponding to a terminal device that needs to be woken up in the first bit sequence may be set to 1, and a bit corresponding to a terminal device that does not need to be woken up may be set to 0, to obtain the first bit sequence.

Further, the network device may determine a fourth cyclic shift value based on time domain information of the DCI, and perform a cyclic shift on the first bit sequence based on the fourth cyclic shift value, to obtain a ninth bit sequence. The fourth cyclic shift value satisfies $F_4 = \mathrm{mod}\left(a * SFN + b * n_{s,f}^{\mu}, N\right)$, where $F_4$ is the fourth cyclic shift value, *SFN* is a system frame number (system frame number, SFN) of a frame in which the DCI is located, $n_{s,f}^{\mu}$ is a slot number of a slot in which the DCI is located, and *a* and b are integers predefined in a protocol, and cannot be 0 at the same time.

Further, the network device may map power saving information of a terminal device corresponding to an $i^{th}$ bit in the ninth bit sequence to an $i^{th}$ information block in the DCI. If a value of the $i^{th}$ bit is a first state value, it indicates that the corresponding terminal device needs to be woken up, the $i^{th}$ information block in the DCI is a first-type information block, and a size of the information block is $B_1$. If a value of the $i^{th}$ bit is a second state value, it indicates that the corresponding terminal device does not need to be woken up, the $i^{th}$ information block in the DCI is a second-type information block, and a size of the information block is $B_2$.

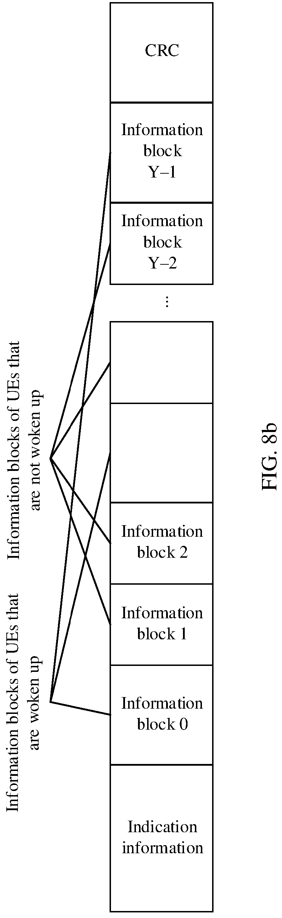

It should be noted that, a difference between this embodiment and Embodiment 2 lies in that, all information blocks in the DC are Z bits in total, and quantities of $Y_1$ and $Y_2$ are not fixed. As shown in FIG. 8b, the Y1 first-type information blocks may be discontinuously arranged. Similarly, the Y2 second-type information blocks may also be discontinuously arranged, and an order of information blocks corresponding to terminal devices is consistent with an order of bits corresponding to the terminal devices in the ninth bit sequence. In this embodiment of this application, that $Y_1 + Y_2 \leq N$ is also satisfied. In other words, because a total quantity of bits of the information blocks in DCI is fixed, a case in which a terminal device that is indicated to be woken up or not to be woken up does not have a corresponding information block in the DCI still exists, that is, no matter whether a terminal device is indicated to be woken up or not to be woken up, an information block corresponding to the terminal device may not exist in the DCI so long as the terminal device is sorted backward in the randomized ninth bit sequence.

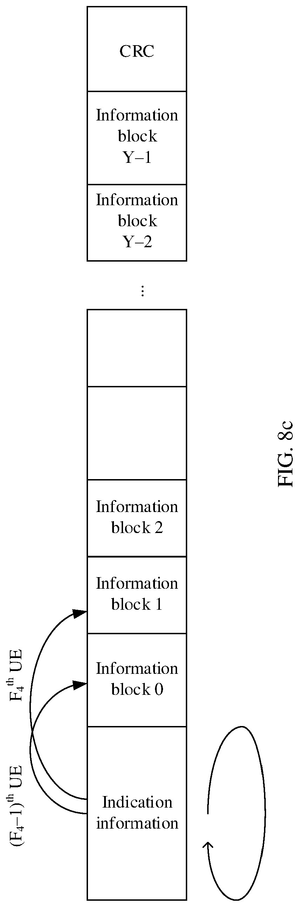

As shown in FIG. 8c, an $(F_4 - 1)^{th}$ terminal device is mapped to an information block 0. If the terminal device is a terminal device that is woken up, a quantity of bits of the information block 0 is $B_1$. If the terminal device is a terminal device that is not woken up, a quantity of bits of the information block 0 is $B_2$. An $F_4^{th}$ terminal device is mapped to an information block 1, and so on. If a total quantity of bits of mapped information blocks is still less than Z after a terminal device of a least significant bit is mapped to an information block, mapping continues from the 0th terminal device of a most significant bit. If the total quantity of bits of the mapped information blocks is still less than Z after all the terminal devices are mapped to the information blocks, zeros are added to remaining locations of the word field.

Step S802: The network device sends the DCI to the N terminal devices.

Step S803: A terminal device receives the DCI from the network device, where the terminal device is one of the foregoing N terminal devices.

Step S804: The terminal device determines, based on the indication information in the DCI and the time domain information of the DCI, an information block used to indicate power saving information of the terminal device.

The terminal device may determine, based on the indication information in the DCI and a location of a corresponding bit in the first bit sequence, whether to be woken up. If the bit corresponding to the terminal device in the first bit sequence is the first state value, the terminal device may determine that the terminal device needs to wake up. Further, the terminal device may determine the fourth cyclic shift value in a manner the same as that of the network device, perform the cyclic shift on the first bit sequence by using the fourth cyclic shift value, and then determine, based on a location of a corresponding bit in the ninth bit sequence, whether the information block corresponding to the terminal device exists in the DCI. If the information block exists, the terminal device is woken up based on an indication of the power saving information in the corresponding information block. If the information block does not exist, the terminal device is woken up based on a default wake-up manner.

If the bit corresponding to the terminal device in the first bit sequence is the second state value, the terminal device may determine that the terminal device does not need to wake up. Further, the terminal device may determine the fourth cyclic shift value in a manner the same as that of the network device, perform the cyclic shift on the first bit sequence by using the fourth cyclic shift value, and then determine, based on a location of a corresponding bit in the ninth bit sequence, whether the information block corresponding to the terminal device exists in the DCI. If the information block exists, the terminal device continues to sleep based on an indication of the power saving information in the corresponding information block. If the information block does not exist, the terminal device continues to sleep based on a default non-wake-up manner.

It can be learned from the foregoing content that, according to the method for sending DCI, the network device may perform randomization on terminal devices that are woken up and terminal devices that are not woken up, and map the terminal devices to information blocks in a unified order. In this way, each terminal device may have a fair chance to obtain power saving information, thereby giving full play to a power saving function of a power saving signal.

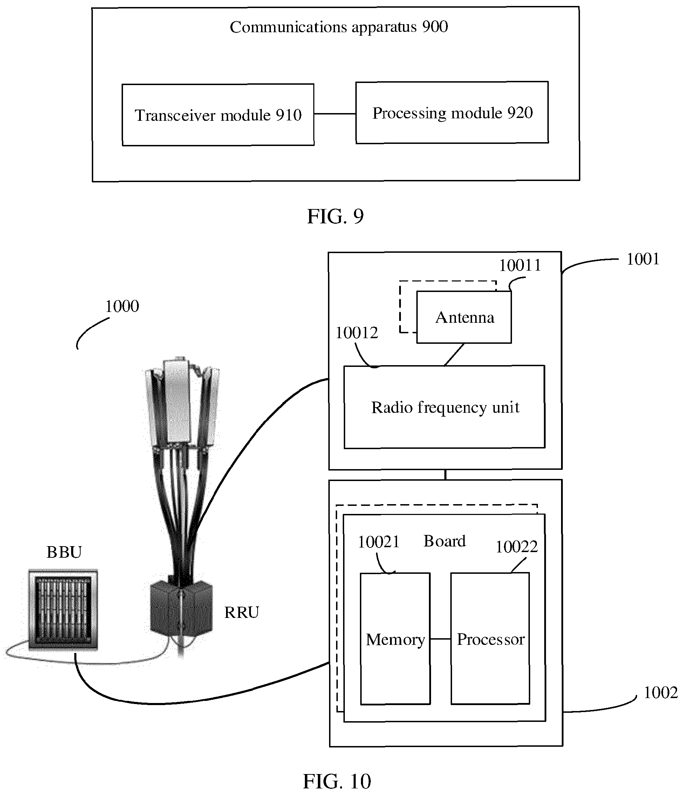

An embodiment of this application provides a communications apparatus. FIG. 9 is a schematic diagram of a structure of a communications apparatus according to an embodiment of this application. The communications apparatus 900 includes a transceiver module 910 and a processing module 920. The communications apparatus may be configured to implement a function of the network device in any one of the foregoing method embodiments. For example, the communications apparatus may be a network device or a chip included in a network device.

When the communications apparatus is a network device and performs the method embodiment shown in FIG. 2, the processing module 920 is configured to determine DCI, where the DCI includes indication information and $m_1$ information blocks, the indication information is used to indicate $b_1$ terminal devices in N terminal devices, $m_1 \leq b_1 \leq N$, each information block in the $m_1$ information blocks corresponds to one terminal device in the $b_1$ terminal devices, the information block is used to indicate power saving information of a corresponding terminal device, terminal devices to which the $m_1$ information blocks respectively correspond are determined based on the indication information and time domain information of the DCI, and the time domain information of the DCI includes a frame number of a frame in which the DCI is located and/or a slot number of a slot in which the DCI is located; and the transceiver module 910 is configured to send the DCI to the N terminal devices.

In a possible design, the indication information is a first bit sequence; and the processing module 920 is further configured to:
determine a first cyclic shift value based on the time domain information of the DCI; and perform, based on the first cyclic shift value, a cyclic shift on all or a part of the first bit sequence, to determine the terminal devices to which the $m_1$ information blocks respectively correspond.

In a possible design, the indication information is the first bit sequence, the first bit sequence includes N bits, and each bit in the *N* bits corresponds to one terminal device in the *N* terminal devices.

The processing module 920 is specifically configured to: perform, based on the first cyclic shift value, the cyclic shift on the first bit sequence, to obtain a second bit sequence; and determine that a terminal device corresponding to an *i*<sup>th</sup> information block in the $m_1$ information blocks is a terminal device corresponding to an *i*<sup>th</sup> bit whose value is the first state value in the second bit sequence.

In a possible design, the first cyclic shift value satisfies:

$$p_1 = \left(\left\lfloor \left(n_f \times N_{slot}^{frame} + n_{s,f}\right)/k_s \right\rfloor\right) mod\ N,$$

$$p_1 = \left(n_f \times N_{slot}^{frame} + n_{s,f}\right) mod\ N,$$

or

$$p_1 = \left(n_f + n_{s,f}\right) mod\ N,$$

where

$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

In a possible design, the indication information is the first bit sequence, the first bit sequence includes N bits, and each bit in the *N* bits corresponds to one terminal device in the *N* terminal devices.

The processing module 920 is specifically configured to: determine a third bit sequence based on the first bit sequence, where the third bit sequence includes $b_1$ bits that are in the N bits and that correspond to the $b_1$ terminal devices; perform, based on the first cyclic shift value, a cyclic shift on the third bit sequence, to obtain a fourth bit sequence; and determine that a terminal device corresponding to an *i*<sup>th</sup> information block in the $m_1$ information blocks is a terminal device corresponding to an *i*<sup>th</sup> bit in the fourth bit sequence.

In a possible design, the first cyclic shift value satisfies:

$$p_1 = \left(\left\lfloor \left(n_f \times N_{slot}^{frame} + n_{s,f}\right)/k_s \right\rfloor\right) mod\ b_1,$$

$$p_1 = \left(n_f \times N_{slot}^{frame} + n_{s,f}\right) mod\ b_1,$$

or

$$p_1 = \left(n_f + n_{s,f}\right) mod\ b_1,$$

where

$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

In a possible design, $m_1 = b_1$; and a size of each information block in the $m_1$ information blocks is determined based on a maximum value of a sum of quantities of bits of the information blocks included in the DCI and $b_1$.

In a possible design, the maximum value of the sum of the quantities of bits of the information blocks included in the DCI is $Z_1$, and the size of each information block in the $m_1$ information blocks satisfies:

$$\beta_1 = min\{\lceil Z_1/m_1 \rceil, \beta_{max1}\},$$

or

$$\beta_1 = min\{\lfloor Z_1/m_1 \rfloor, \beta_{max1}\},$$

where

$\beta_1$ is a quantity of bits included in each information block in the $m_1$ information blocks, $Z_1$ is the maximum value of the sum of the quantities of bits of the information blocks included in the DCI, $\beta_{max1}$ is a maximum value of the quantity of the bits included in each information block in the $m_1$ information blocks.

It should be understood that the processing module 920 in the communications apparatus may be implemented by a processor or a processor-related circuit component, and the transceiver module 910 may be implemented by a transceiver or a transceiver-related circuit component. Operations and/or functions of the modules in the communications apparatus are separately used to implement corresponding procedures of the method shown in FIG. 2. For brevity, details are not described herein again.

FIG. 10 is a schematic diagram of another structure of a communications apparatus according to an embodiment of this application. The communications apparatus may be specifically a network device, for example, a base station, configured to implement a function of the network device in any one of the foregoing method embodiments.

The network device includes one or more radio frequency units, for example, a remote radio unit (remote radio unit, RRU) 1001 and one or more baseband units (baseband units, BBUs) (which may also be referred to as digital units (digital units, DUs)) 1002. The RRU 1001 may be referred to as a transceiver unit, a transceiver machine, a transceiver circuit, a transceiver, or the like, and may include at least one antenna 10011 and a radio frequency unit 10012. The RRU 1001 is mainly configured to send and receive a radio frequency signal and convert the radio frequency signal and a baseband signal. The BBU 1002 is mainly configured to: perform baseband processing, control the base station, and the like. The RRU 1001 and the BBU 1002 may be physically disposed together, or may be physically disposed separately, namely, a distributed base station.

The BBU 1002 is a control center of the base station, may also be referred to as a processing unit, and is mainly configured to complete baseband processing functions such as channel coding, multiplexing, modulation, and spectrum spreading. For example, the BBU (the processing unit) 1002 may be configured to control the base station to perform an operation procedure related to the network device in the foregoing method embodiments.

In an example, the BBU 1002 may include one or more boards, and a plurality of boards may jointly support a radio access network (for example, an LTE network) having a single access standard, or may separately support radio access networks (for example, an LTE network, a 5G network, or another network) having different access standards. The BBU 1002 may further include a memory 10021 and a processor 10022. The memory 10021 is configured to store necessary instructions and necessary data. The processor 10022 is configured to control the base station to perform a necessary action, for example, is configured to control the base station to perform a sending operation in the foregoing method embodiments. The memory 10021 and the processor 10022 may serve one or more boards. In other words, a memory and a processor may be independently disposed on each board, or a plurality of boards may share a same memory and a same processor. In addition, a necessary circuit may be further disposed on each board.

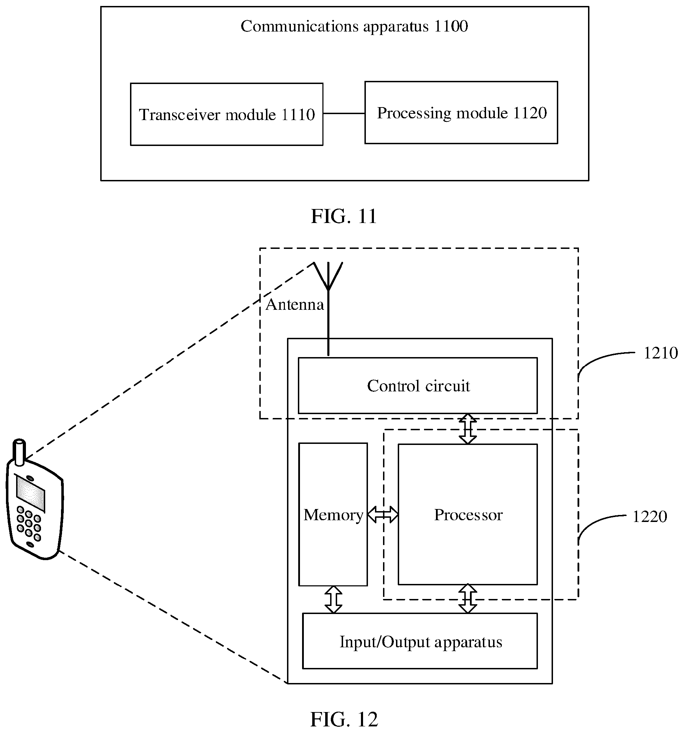

An embodiment of this application further provides another communications apparatus. FIG. 11 is a schematic diagram of a structure of a communications apparatus according to an embodiment of this application. The communications apparatus 1100 includes a transceiver module 1110 and a processing module 1120. The communications apparatus may be configured to implement a function of the terminal device in any one of the foregoing method embodiments. For example, the communications apparatus may be a terminal device, for example, a handheld terminal device or a vehicle-mounted terminal device. Alternatively, the communications apparatus may be a chip included in a terminal device, or an apparatus including the terminal device, for example, various types of vehicles.

When the communications apparatus is a terminal device and performs the method embodiment shown in FIG. 2, the transceiver module 1110 is configured to receive DCI from a network device, where the DCI includes indication information and $m_1$ information blocks, the indication information is used to indicate $b_1$ terminal devices in $N$ terminal devices, $m_1 \le b_1 \le N$, and the terminal device is one of the $b_1$ terminal devices; and the processing module 1120 is configured to determine, based on the indication information and time domain information of the DCI, an information block used to indicate power saving information of the terminal device from the $m_1$ information blocks, where the time domain information of the DCI includes a frame number of a frame in which the DCI is located and/or a slot number of a slot in which the DCI is located.

In a possible design, the indication information is a first bit sequence; and the processing module 1120 is specially configured to: determine a first cyclic shift value based on the time domain information of the DCI; and perform, based on the first cyclic shift value, a cyclic shift on all or a part of the first bit sequence, to determine the information block used to indicate the power saving information of the terminal device from the $m_1$ information blocks.

In a possible design, the indication information is the first bit sequence, the first bit sequence includes N bits, and one bit in the $N$ bits corresponds to the terminal device.

The processing module 1120 is further specially configured to: perform, based on the first cyclic shift value, the cyclic shift on the first bit sequence, to obtain a second bit sequence; determine that a bit corresponding to the terminal device in the second bit sequence is an $i^{th}$ bit whose value is a first state value; and determine that an $i^{th}$ information block in the $m_1$ information blocks is the information block used to indicate the power saving information of the terminal device.

In a possible design, the first cyclic shift value satisfies:

$$p_1 = \left(\left\lfloor \left(n_f \times N_{slot}^{frame} + n_{s,f}\right)/k_s \right\rfloor\right) mod\ N,$$

$$p_1 = \left(n_f \times N_{slot}^{frame} + n_{s,f}\right) mod\ N,$$

or

$$p_1 = \left(n_f + n_{s,f}\right) mod\ N,$$

where
$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

In a possible design, the indication information is the first bit sequence, the first bit sequence includes N bits, and one bit in the N bits corresponds to the terminal device.

The processing module 1120 is specially configured to: determine a third bit sequence based on the first bit sequence, where the third bit sequence includes $b_1$ bits that are in the $N$ bits and that correspond to the $b_1$ terminal devices; perform, based on the first cyclic shift value, a cyclic shift on the third bit sequence, to obtain a fourth bit sequence; determine that a bit corresponding to the terminal device in the fourth bit sequence is an $i^{th}$ bit; and determine that an $i^{th}$ information block in the $m_1$ information blocks is the information block used to indicate the power saving information of the terminal device.

In a possible design, the first cyclic shift value satisfies:

$$p_1 = \left(\left\lfloor \left(n_f \times N_{slot}^{frame} + n_{s,f}\right)/k_s \right\rfloor\right) mod\ b_1,$$

$$p_1 = \left(n_f \times N_{slot}^{frame} + n_{s,f}\right) mod\ b_1,$$

or

$$p_1 = \left(n_f + n_{s,f}\right) mod\ b_1,$$

where
$p_1$ is the first cyclic shift value, $n_f$ is the frame number of the frame in which the DCI is located, $n_{s,f}$ is the slot number of the slot in which the DCI is located, $N_{slot}^{frame}$ is a quantity of slots included in one frame, $k_s$ is a monitoring periodicity of the DCI, and *mod* represents a modulo operation.

In a possible design, $m_1 = b_1$; and a size of each information block in the $m_1$ information blocks is determined based on a maximum value of a sum of quantities of bits of information blocks included in the DCI and $b_1$.

In a possible design, the size of each information block in the $m_1$ information blocks satisfies:

$$\beta_1 = min\{\lceil Z_1/m_1 \rceil, \beta_{max1}\}.$$

, or

$$\beta_1 = min\{\lfloor Z_1/m_1 \rfloor, \beta_{max1}\},$$

where
$\beta_1$ is a quantity of bits included in each information block in the $m_1$ information blocks, $Z_1$ is the maximum value of the sum of the quantities of bits of the information blocks included in the DCI, $\beta_{max1}$ is a maximum value of the quantity of the bits included in each information block in the $m_1$ information blocks.

The processing module 1120 in the communications apparatus may be implemented by a processor or a processor-related circuit component, and the transceiver module 1110 may be implemented by a transceiver or a transceiver-related circuit component. Operations and/or functions of the modules in the communications apparatus are separately used to implement corresponding procedures of the method shown in FIG. 2. For brevity, details are not described herein again.

FIG. 12 is a schematic diagram of another structure of a communications apparatus according to an embodiment of this application. The communications apparatus may be specifically a terminal device. For ease of understanding and illustration, in FIG. 12, a mobile phone is used as an example of the terminal device. As shown in FIG. 12, the terminal device includes a processor, and may further include a memory. In addition, the terminal device may further include a radio frequency circuit, an antenna, an input/output apparatus, and the like. The processor is mainly configured to: process a communications protocol and communications data, control the terminal device, execute a software program, process data of the software program, and the like. The memory is configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display screen, and a keyboard, is mainly configured to receive data input by a user and output data to the user. It should be noted that some types of terminal devices may not have an input/output apparatus.

When data needs to be sent, the processor performs baseband processing on to-be-sent data, and outputs a baseband signal to the radio frequency circuit. After performing radio frequency processing on the baseband signal, the radio frequency circuit sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 12 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 12, the terminal device includes a transceiver unit 1210 and a processing unit 1220. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like. It should be understood that the transceiver unit 1210 is configured to perform a sending operation and a receiving operation on the terminal device side in the foregoing method embodiments, and the processing unit 1220 is configured to perform an operation other than the receiving/sending operation of the terminal device in the foregoing method embodiments.

An embodiment of this application further provides a chip system. The chip system includes a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that steps in the foregoing method embodiments may be implemented by using a hardware integrated logic circuit in the processor or instructions in a form of software. The steps of the method disclosed with reference to the embodiments of this application may be directly performed and completed by a hardware processor, or may be performed and completed by using a combination of hardware in the processor and a software module.

An embodiment of this application further provides a computer-readable storage medium. The computer storage medium stores computer-readable instructions. When a computer reads and executes the computer-readable instructions, the computer is enabled to perform the method according to any one of the foregoing method embodiments.

An embodiment of this application further provides a computer program product. When a computer reads and executes the computer program product, the computer is enabled to perform the method according to any one of the foregoing method embodiments.

An embodiment of this application further provides a communications system. The communications system includes a network device and at least one terminal device.

It should be understood that, the processor in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory in the embodiments of this application may be a volatile memory, or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps can be implemented by electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In a plurality of embodiments provided in this application, it should be understood that the disclosed system, apparatus, and method may be implemented in another manner. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

Units described as separate parts may or may not be physically separate, and parts displayed as units may or may not be physical units, may be located in one position, or may be distributed on a plurality of network units. Some or all of the units may be selected based on an actual requirement to achieve an objective of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending downlink control information, DCI, performed by a network device or a chip in a network device, wherein the method comprises:

   determining (S201) DCI, wherein the DCI comprises indication information and $m_1$ information blocks, the indication information is used to indicate $b_1$ terminal devices in $N$ terminal devices, $m_1 \leq b_1 \leq N$, each information block in the $m_1$ information blocks corresponds to one terminal device in the $b_1$ terminal devices, the information block is used to indicate power saving information of a corresponding terminal device, terminal devices to which the $m_1$ information blocks respectively correspond are determined based on the indication information and time domain information of the DCI, and the time domain information comprises a frame number of a frame in which the DCI is located and/or a slot number of a slot in which the DCI is located; and
   sending (S202) the DCI to the N terminal devices.

2. The method according to claim 1, wherein the indication information is a first bit sequence; and
   the method further comprises:

   determining the first cyclic shift value based on the time domain information of the DCI; and
   performing, based on the first cyclic shift value, a cyclic shift on all or a part of the first bit sequence, to determine the terminal devices to which the $m_1$ information blocks respectively correspond.

3. The method according to claim 2, wherein the indication information is the first bit sequence, the first bit sequence comprises $N$ bits, and each bit in the $N$ bits corresponds to one terminal device in the $N$ terminal devices; and
   the performing, based on the first cyclic shift value, a cyclic shift on all or a part of the first bit sequence, to determine the terminal devices to which the $m_1$ information blocks respectively correspond comprises:

   performing, based on the first cyclic shift value, the cyclic shift on the first bit sequence, to obtain a second bit sequence; and
   determining that a terminal device corresponding to an $i^{th}$ information block in the $m_1$ information blocks is a terminal device corresponding to an $i^{th}$ bit whose value is a first state value in the second bit sequence.

4. The method according to claim 3, wherein the first cyclic shift value satisfies:

$$p_1 = \left( \lfloor (n_f \times N_{slot}^{frame} + n_{s,f}) / k_s \rfloor \right) mod\ N,$$

$$p_1 = \left(n_f \times N_{slot}^{frame} + n_{s,f}\right) mod\ N,$$

or

$$p_1 = \left(n_f + n_{s,f}\right) mod\ N,$$

wherein

$p_1$ is the first cyclic shift value, $n_f$ is the frame number, $n_{s,f}$ is the slot number, $N_{slot}^{frame}$ is a quantity of slots comprised in one frame, $k_s$ is a monitoring periodicity of the DCI, and *mod* represents a modulo operation.

5. The method according to claim 2, wherein the indication information is the first bit sequence, the first bit sequence comprises $N$ bits, and each bit in the $N$ bits corresponds to one terminal device in the $N$ terminal devices; and the performing, based on the first cyclic shift value, a cyclic shift on all or a part of the first bit sequence, to determine the terminal devices to which the $m_1$ information blocks respectively correspond comprises:

> determining a third bit sequence based on the first bit sequence, wherein the third bit sequence comprises $b_1$ bits that are in the $N$ bits and that correspond to the $b_1$ terminal devices;
> performing, based on the first cyclic shift value, a cyclic shift on the third bit sequence, to obtain a fourth bit sequence; and
> determining that a terminal device corresponding to an $i^{th}$ information block in the $m_1$ information blocks is a terminal device corresponding to an $i^{th}$ bit in the fourth bit sequence.

6. A method for sending downlink control information, DCI, performed by a terminal device or a chip in a terminal device, wherein the method comprises:

> receiving (S203) DCI from a network device, wherein the DCI comprises indication information and $m_1$ information blocks, the indication information is used to indicate $b_1$ terminal devices in N terminal devices, $m_1 \leq b_1 \leq N$, and the terminal device is one of the $b_1$ terminal devices; and
> determining (S204), based on the indication information and time domain information of the DCI, an information block used to indicate power saving information of the terminal device from the $m_1$ information blocks, wherein the time domain information comprises a frame number of a frame in which the DCI is located and/or a slot number of a slot in which the DCI is located.

7. The method according to claim 6, wherein the indication information is a first bit sequence; and the determining (S204), based on the indication information and time domain information of the DCI, an information block used to indicate power saving information of the terminal device from the $m_1$ information blocks comprises:

> determining the first cyclic shift value based on the time domain information of the DCI; and
> performing, based on the first cyclic shift value, a cyclic shift on all or a part of the first bit sequence, to determine the information block used to indicate the power saving information of the terminal device from the $m_1$ information blocks.

8. The method according to claim 7, wherein the indication information is the first bit sequence, the first bit sequence comprises N bits, and one bit in the $N$ bits corresponds to the terminal device; and the performing, based on the first cyclic shift value, a cyclic shift on all or a part of the indication information, to determine the information block used to indicate the power saving information of the terminal device from the $m_1$ information blocks comprises:

> performing, based on the first cyclic shift value, the cyclic shift on the first bit sequence, to obtain a second bit sequence;
> determining, , that a bit corresponding to the terminal device in the second bit sequence is an $i^{th}$ bit whose value is a first state value; and
> determining, , that an $i^{th}$ information block in the $m_1$ information blocks is the information block used to indicate the power saving information of the terminal device.

9. The method according to claim 8, wherein the first cyclic shift value satisfies:

$$p_1 = \left( \lfloor \left( n_f \times N_{slot}^{frame} + n_{s,f} \right) / k_s \rfloor \right) mod\ N,$$

$$p_1 = \left( n_f \times N_{slot}^{frame} + n_{s,f} \right) mod\ N$$

, or

$$p_1 = \left( n_f + n_{s,f} \right) mod\ N,$$

wherein

$p_1$ is the first cyclic shift value, $n_f$ is the frame number, $n_{s,f}$ is the slot number, $N_{slot}^{frame}$ is a quantity of slots comprised in one frame, $k_s$ is a monitoring periodicity of the DCI, and *mod* represents a modulo operation.

10. The method according to claim 7, wherein the indication information is the first bit sequence, the first bit sequence comprises N bits, and one bit in the *N* bits corresponds to the terminal device; and
the performing, based on the first cyclic shift value, a cyclic shift on all or a part of the first bit sequence, to determine the information block used to indicate the power saving information of the terminal device from the $m_1$ information blocks comprises:

> determining a third bit sequence based on the first bit sequence, wherein the third bit sequence comprises $b_1$ bits that are in the N bits and that correspond to the $b_1$ terminal devices;
> performing, based on the first cyclic shift value, a cyclic shift on the third bit sequence, to obtain a fourth bit sequence;
> determining
> that a bit corresponding to the terminal device in the fourth bit sequence is an $i^{th}$ bit; and
> determining that an $i^{th}$ information block in the $m_1$ information blocks is the information block used to indicate the power saving information of the terminal device.

11. The method according to claim 5 or 10, wherein the first cyclic shift value satisfies:

$$p_1 = \left( \lfloor \left( n_f \times N_{slot}^{frame} + n_{s,f} \right) / k_s \rfloor \right) mod\ b_1,$$

$$p_1 = \left( n_f \times N_{slot}^{frame} + n_{s,f} \right) mod\ b_1,$$

or

$$p_1 = \left( n_f + n_{s,f} \right) mod\ b_1,$$

wherein

$p_1$ is the first cyclic shift value, $n_f$ is the frame number, $n_{s,f}$ is the slot number, $N_{slot}^{frame}$ is a quantity of slots comprised in one frame, $k_s$ is a monitoring periodicity of the DCI, and *mod* represents a modulo operation.

12. The method according to any one of claims 1, 2, 5, 6, 7, 10, and 11, wherein $m_1 = b_1$, and a size of each information block in the $m_1$ information blocks is determined based on a maximum value of a sum of quantities of bits of the information blocks comprised in the DCI and $b_1$.

13. The method according to claim 12, wherein the size of each information block in the $m_1$ information blocks satisfies:

$$\beta_1 = min\{\lceil Z_1/m_1 \rceil, \beta_{max1}\},$$

or

$$\beta_1 = min\{\lfloor Z_1/m_1\rfloor, \beta_{max1}\},$$

wherein

$\beta_1$ is a quantity of bits comprised in each information block in the $m_1$ information blocks, $Z_1$ is the maximum value of the sum of the quantities of bits of the information blocks comprised in the DCI, $\beta_{max1}$ is a maximum value of the quantity of the bits comprised in each information block in the $m_1$ information blocks, and $Z_1$ and $\beta_1$ are positive integers.

14. A communications apparatus, wherein the communications apparatus is a network device or a chip in a network device configured to perform the method according to any one of claims 1 to 5; or the communications apparatus is a terminal device or a chip in a terminal device configured to perform the method according to any one of claims 6 to 13.

15. A computer-readable storage medium comprising instructions which, when executed by a computer, cause the computer to carry out the method according to any one of claims 1 to 13.

**Patentansprüche**

1. Verfahren zum Senden von Downlink-Steuerinformationen, DCI, das durch eine Netzwerkeinrichtung oder einen Chip in einer Netzwerkeinrichtung durchgeführt wird, wobei das Verfahren Folgendes umfasst:

Bestimmen (S201) von DCI, wobei die DCI Anzeigeinformationen und $m_1$ Informationsblöcke umfassen, die Anzeigeinformationen dazu verwendet werden, $b_1$ Endgeräteeinrichtungen in N Endgeräteeinrichtungen anzuzeigen, $m_1 \le b_1 \le N$, jeder Informationsblock der $m_1$ Informationsblöcke einer Endgeräteeinrichtung der $b_1$ Endgeräteeinrichtungen entspricht, der Informationsblock dazu verwendet wird, Energiesparinformationen einer entsprechenden Endgeräteeinrichtung anzuzeigen, Endgeräteeinrichtungen, denen die $m_1$ Informationsblöcke jeweils entsprechen, basierend auf den Anzeigeinformationen und Zeitbereichsinformationen der DCI bestimmt werden und die Zeitbereichsinformationen eine Frame-Nummer eines Frames, in dem sich die DCI befinden, und/oder eine Slot-Nummer eines Slots, in dem sich die DCI befinden, umfassen; und
Senden (S202) der DCI an die $N$ Endgeräteeinrichtungen.

2. Verfahren nach Anspruch 1, wobei die Anzeigeinformation eine erste Bitfolge sind; und wobei das Verfahren ferner Folgendes umfasst:

Bestimmen des ersten zyklischen Verschiebungswerts basierend auf den Zeitbereichsinformationen der DCI; und
Durchführen, basierend auf dem ersten zyklischen Verschiebungswert, einer zyklischen Verschiebung der gesamten oder eines Teils der Bitfolge, um die Endgeräteeinrichtungen zu bestimmen, denen die $m_1$ Informationsblöcke jeweils entsprechen.

3. Verfahren nach Anspruch 2, wobei die Anzeigeinformationen die erste Bitfolge sind, die erste Bitfolge $N$ Bits umfasst und jedes Bit in den $N$ Bits einer Endgeräteeinrichtung in den $N$ Endgeräteeinrichtungen entspricht; und das Durchführen, basierend auf dem ersten zyklischen Verschiebungswert, einer zyklischen Verschiebung der gesamten oder eines Teils der ersten Bitfolge, um die Endgeräteeinrichtungen zu bestimmen, denen die $m_1$ Informationsblöcke jeweils entsprechen, Folgendes umfasst:

Durchführen, basierend auf dem ersten zyklischen Verschiebungswert, der zyklischen Verschiebung der ersten Bitfolge, um eine zweite Bitfolge zu erlangen; und
Bestimmen, dass eine Endgeräteeinrichtung, die einem $i$-ten Informationsblock in den $m_1$ Informationsblöcken entspricht, eine Endgeräteeinrichtung ist, die einem $i$-ten Bit entspricht, dessen Wert ein erster Zustandswert in der zweiten Bitfolge ist.

4. Verfahren nach Anspruch 3, wobei der erste zyklische Verschiebungswert Folgendes erfüllt:

$$p_1 = \left(\lfloor (n_f \times N_{slot}^{frame} + n_{s,f})/k_s\rfloor\right) mod\ N,$$

$$p_1 = \left(n_f \times N_{slot}^{frame} + n_{s,f}\right) \bmod N,$$

oder

$$p_1 = \left(n_f + n_{s,f}\right) \bmod N,$$

wobei

$p_1$ der erste zyklische Verschiebungswert ist, $n_f$ die Frame-Nummer ist, $n_{s,f}$ die Slot-Nummer ist, $N_{slot}^{frame}$ eine Menge von Slots ist, die in einem Frame umfasst sind, $k_s$ eine Überwachungsperiodizität der DCI ist und *mod* eine Modulo-Operation darstellt.

5. Verfahren nach Anspruch 2, wobei die Anzeigeinformationen die erste Bitfolge sind, die erste Bitfolge *N* Bits umfasst und jedes Bit in den *N* Bits einer Endgeräteeinrichtung in den *N* Endgeräteeinrichtungen entspricht; und
das Durchführen, basierend auf dem ersten zyklischen Verschiebungswert, einer zyklischen Verschiebung der gesamten oder eines Teils der Bitfolge, um die Endgeräteeinrichtungen zu bestimmen, denen die $m_1$ Informationsblöcke jeweils entsprechen, Folgendes umfasst:

Bestimmen einer dritten Bitfolge basierend auf der ersten Bitfolge, wobei die dritte Bitfolge $b_1$ Bits umfasst, die sich in den *N* Bits befinden und die den $b_1$ Endgeräteeinrichtungen entsprechen;
Durchführen, basierend auf dem ersten zyklischen Verschiebungswert, einer zyklischen Verschiebung der dritten Bitfolge, um eine vierte Bitfolge zu erlangen; und
Bestimmen, dass eine Endgeräteeinrichtung, die einem *i*-ten Informationsblock in den $m_1$ Informationsblöcken entspricht, eine Endgeräteeinrichtung ist, die einem *i*-ten Bit in der vierten Bitfolge entspricht.

6. Verfahren zum Senden von Downlink-Steuerinformationen, DCI, das durch eine Endgeräteeinrichtung oder einen Chip in einer Endgeräteeinrichtung durchgeführt wird, wobei das Verfahren Folgendes umfasst:

Empfangen (S203) von DCI von einer Netzwerkeinrichtung, wobei die DCI Anzeigeinformationen und $m_1$ Informationsblöcke umfassen, die Anzeigeinformationen dazu verwendet werden, $b_1$ Endgeräteeinrichtungen in *N* Endgeräteeinrichtungen anzuzeigen, $m_1 \leq b_1 \leq N$ und die Endgeräteeinrichtung eine der $b_1$ Endgeräteeinrichtungen ist; und
Bestimmen (S204), basierend auf den Anzeigeinformationen und Zeitbereichsinformationen der DCI, eines Informationsblocks, der dazu verwendet wird, Energiesparinformationen der Endgeräteeinrichtung aus den $m_1$ Informationsblöcken anzuzeigen, wobei die Zeitbereichsinformationen eine Frame-Nummer eines Frames, in dem sich die DCI befinden, und/oder eine Slot-Nummer eines Slots, in dem sich die DCI befinden, umfassen.

7. Verfahren nach Anspruch 6, wobei die Anzeigeinformation eine erste Bitfolge sind; und
das Bestimmen (S204), basierend auf den Anzeigeinformationen und Zeitbereichsinformationen der DCI, eines Informationsblocks, der dazu verwendet wird, Energiesparinformationen der Endgeräteeinrichtung aus den $m_1$ Informationsblöcken anzuzeigen, Folgendes umfasst:

Bestimmen des ersten zyklischen Verschiebungswerts basierend auf den Zeitbereichsinformationen der DCI; und
Durchführen, basierend auf dem ersten zyklischen Verschiebungswert, einer zyklischen Verschiebung der gesamten oder eines Teils der ersten Bitfolge, um den Informationsblock zu bestimmen, der dazu verwendet wird, die Energiesparinformationen der Endgeräteeinrichtung aus den $m_1$ Informationsblöcken anzuzeigen.

8. Verfahren nach Anspruch 7, wobei die Anzeigeinformationen die erste Bitfolge sind, die erste Bitfolge *N* Bits umfasst und ein Bit in den *N* Bits der Endgeräteeinrichtung entspricht; und
das Durchführen, basierend auf dem ersten zyklischen Verschiebungswert, einer zyklischen Verschiebung der gesamten oder eines Teils der Anzeigeinformationen, um den Informationsblock zu bestimmen, der dazu verwendet wird, die Energiesparinformationen der Endgeräteeinrichtung aus den $m_1$ Informationsblöcken anzuzeigen, Folgendes umfasst:

Durchführen, basierend auf dem ersten zyklischen Verschiebungswert, der zyklischen Verschiebung der ersten Bitfolge, um eine zweite Bitfolge zu erlangen;
Bestimmen, dass ein Bit, das der Endgeräteeinrichtung in der zweiten Bitfolge entspricht, ein $i$-tes Bit ist, dessen Wert ein erster Zustandswert ist; und
Bestimmen, dass ein $i$-ter Informationsblock in den $m_1$ Informationsblöcken der Informationsblock ist, der dazu verwendet wird, die Energiesparinformationen der Endgeräteeinrichtung anzuzeigen.

9.  Verfahren nach Anspruch 8, wobei der erste zyklische Verschiebungswert Folgendes erfüllt:

$$p_1 = \left(\lfloor(n_f \times N_{slot}^{frame} + n_{s,f})/k_s\rfloor\right) mod\ N,$$

$$p_1 = \left(n_f \times N_{slot}^{frame} + n_{s,f}\right) mod\ N,$$

oder

$$p_1 = \left(n_f + n_{s,f}\right) mod\ N,$$

wobei

$p_1$ der erste zyklische Verschiebungswert ist, $n_f$ die Frame-Nummer ist, $n_{s,f}$ die Slot-Nummer ist, $N_{slot}^{frame}$ eine Menge von Slots ist, die in einem Frame umfasst sind, $k_s$ eine Überwachungsperiodizität der DCI ist und *mod* eine Modulo-Operation darstellt.

10. Verfahren nach Anspruch 7, wobei die Anzeigeinformationen die erste Bitfolge sind, die erste Bitfolge *N* Bits umfasst und ein Bit in den *N* Bits der Endgeräteeinrichtung entspricht; und
das Durchführen, basierend auf dem ersten zyklischen Verschiebungswert, einer zyklischen Verschiebung der gesamten oder eines Teils der ersten Bitfolge, um den Informationsblock zu bestimmen, der dazu verwendet wird, die Energiesparinformationen der Endgeräteeinrichtung aus den $m_1$ Informationsblöcken anzuzeigen, Folgendes umfasst:

Bestimmen einer dritten Bitfolge basierend auf der ersten Bitfolge, wobei die dritte Bitfolge $b_1$ Bits umfasst, die sich in den *N* Bits befinden und die den $b_1$ Endgeräteeinrichtungen entsprechen;
Durchführen, basierend auf dem ersten zyklischen Verschiebungswert, einer zyklischen Verschiebung der dritten Bitfolge, um eine vierte Bitfolge zu erlangen;
Bestimmen, dass ein Bit, das der Endgeräteeinrichtung in der vierten Bitfolge entspricht, ein $i$-tes Bit ist; und
Bestimmen, dass ein $i$-ter Informationsblock in den $m_1$ Informationsblöcken der Informationsblock ist, der dazu verwendet wird, die Energiesparinformationen der Endgeräteeinrichtung anzuzeigen.

11. Verfahren nach Anspruch 5 oder 10, wobei der erste zyklische Verschiebungswert Folgendes erfüllt:

$$p_1 = \left(\lfloor(n_f \times N_{slot}^{frame} + n_{s,f})/k_s\rfloor\right) mod\ b_1,$$

$$p_1 = \left(n_f \times N_{slot}^{frame} + n_{s,f}\right) mod\ b_1,$$

oder

$$p_1 = \left(n_f + n_{s,f}\right) mod\ b_1$$

, wobei

$p_1$ der erste zyklische Verschiebungswert ist, $n_f$ die Frame-Nummer ist, $n_{s,f}$ die Slot-Nummer ist, $N_{slot}^{frame}$ eine Menge von Slots ist, die in einem Frame umfasst sind, $k_s$ eine Überwachungsperiodizität der DCI ist und *mod* eine Modulo-Operation darstellt.

**12.** Verfahren nach einem der Ansprüche 1, 2, 5, 6, 7, 10 und 11, wobei $m_1 = b_1$ und eine Größe jedes Informationsblocks in den $m_1$ Informationsblöcken basierend auf einem Maximalwert einer Summe der Mengen von Bits der Informationsblöcke, die in den DCI und $b_1$ umfasst sind, bestimmt wird.

**13.** Verfahren nach Anspruch 12, wobei die Größe jedes Informationsblocks in den $m_1$ Informationsblöcken Folgendes erfüllt:

$$\beta_1 = min\{\lceil Z_1/m_1 \rceil, \beta_{max1}\},$$

oder

$$\beta_1 = min\{\lfloor Z_1/m_1 \rfloor, \beta_{max1}\},$$

wobei

$\beta_1$ eine Menge von Bits ist, die in jedem Informationsblock der $m_1$ Informationsblöcke umfasst sind, $Z_1$ der Maximalwert der Summe der Mengen von Bits der Informationsblöcke ist, die in den DCI umfasst sind, $\beta_{max1}$ ein Maximalwert der Menge der Bits ist, die in jedem Informationsblock der $m_1$ Informationsblöcke umfasst sind, und $Z_1$ und $\beta_1$ positive ganze Zahlen sind.

**14.** Kommunikationsvorrichtung, wobei die Kommunikationsvorrichtung eine Netzwerkeinrichtung oder ein Chip in einer Netzwerkeinrichtung ist, die dazu konfiguriert ist, das Verfahren nach einem der Ansprüche 1 bis 5 durchzuführen; oder die Kommunikationsvorrichtung eine Endgeräteeinrichtung oder ein Chip in einer Endgeräteeinrichtung ist, die dazu konfiguriert ist, das Verfahren nach einem der Ansprüche 6 bis 13 durchzuführen.

**15.** Computerlesbares Speichermedium, umfassend Anweisungen, die bei Ausführung durch einen Computer den Computer dazu veranlassen, das Verfahren nach einem der Ansprüche 1 bis 13 durchzuführen.

**Revendications**

**1.** Procédé permettant d'envoyer des informations de commande de liaison descendante, DCI, réalisé par un dispositif réseau ou une puce dans un dispositif réseau, dans lequel le procédé comprend :

la détermination (S201) de DCI, dans lequel les DCI comprennent des informations d'indication et $m_1$ blocs d'informations, les informations d'indication sont utilisées pour indiquer $b_1$ dispositifs terminaux parmi N dispositifs terminaux, $m_1 \leq b_1 \leq N$, chaque bloc d'informations parmi les $m_1$ blocs d'informations correspond à un dispositif terminal parmi les $b_1$ dispositifs terminaux, le bloc d'informations est utilisé pour indiquer des informations d'économie d'énergie d'un dispositif terminal correspondant, les dispositifs terminaux auxquels correspondent respectivement les $m_1$ blocs d'informations sont déterminés sur la base des informations d'indication et des informations de domaine temporel des DCI, et les informations de domaine temporel comprennent un numéro de trame dans laquelle les DCI sont situées et/ou un numéro de créneau d'un créneau dans lequel les DCI sont situées ; et
l'envoi (S202) des DCI aux $N$ dispositifs terminaux.

**2.** Procédé selon la revendication 1, dans lequel les informations d'indication sont une première séquence de bits ; et le procédé comprend également :

la détermination de la première valeur de décalage cyclique sur la base des informations de domaine temporel des DCI ; et
la réalisation, sur la base de la première valeur de décalage cyclique, d'un décalage cyclique sur tout ou une partie de la première séquence de bits, pour déterminer les dispositifs terminaux auxquels correspondent respectivement les $m_1$ blocs d'informations.

**3.** Procédé selon la revendication 2, dans lequel les informations d'indication sont la première séquence de bits, la première séquence de bits comprend $N$ bits, et chaque bit parmi les $N$ bits correspond à un dispositif terminal parmi les $N$ terminaux ; et

la réalisation, sur la base de la première valeur de décalage cyclique, d'un décalage cyclique sur tout ou une partie de la première séquence de bits, pour déterminer les dispositifs terminaux auxquels correspondent respectivement les $m_1$ blocs d'informations comprend :

la réalisation, sur la base de la première valeur de décalage cyclique, du décalage cyclique sur la première séquence de bits, pour obtenir une deuxième séquence de bits ; et

la détermination qu'un dispositif terminal correspondant à un $i^{-ième}$ bloc d'informations parmi les $m_1$ blocs d'informations est un dispositif terminal correspondant à un $i^{-ième}$ bit dont la valeur est une première valeur d'état dans la deuxième séquence de bits.

4. Procédé selon la revendication 3, dans lequel la première valeur de décalage cyclique satisfait :

$$p_1 = \left( \lfloor \left( n_f \times N_{slot}^{frame} + n_{s,f} \right) / k_s \rfloor \right) mod\ N,$$

$$p_1 = \left( n_f \times N_{slot}^{frame} + n_{s,f} \right) mod\ N,$$

ou

$$p_1 = \left( n_f + n_{s,f} \right) mod\ N,$$

dans lequel

$p_1$ est la première valeur de décalage cyclique, $n_f$ est le numéro de trame, $n_{s,f}$ est le numéro de créneau, $N_{slot}^{frame}$ est une quantité de créneaux compris dans une trame, $k_s$ est une périodicité de surveillance des DCI, et *mod* représente une opération modulo.

5. Procédé selon la revendication 2, dans lequel les informations d'indication sont la première séquence de bits, la première séquence de bits comprend $N$ bits, et chaque bit parmi les $N$ bits correspond à un dispositif terminal parmi les $N$ terminaux ; et
la réalisation, sur la base de la première valeur de décalage cyclique, d'un décalage cyclique sur tout ou une partie de la première séquence de bits, pour déterminer les dispositifs terminaux auxquels correspondent respectivement les $m_1$ blocs d'informations comprend :

la détermination d'une troisième séquence de bits sur la base de la première séquence de bits, dans lequel la troisième séquence de bits comprend $b_1$ bits qui sont dans les $N$ bits et qui correspondent aux $b_1$ dispositifs terminaux ;
la réalisation, sur la base de la première valeur de décalage cyclique, d'un décalage cyclique sur la troisième séquence de bits, pour obtenir une quatrième séquence de bits ; et
la détermination qu'un dispositif terminal correspondant à un $i^{-ième}$ bloc d'informations parmi les $m_1$ blocs d'informations est un dispositif terminal correspondant à un $i^{-ième}$ bit dans la quatrième séquence de bits.

6. Procédé permettant d'envoyer des informations de commande de liaison descendante, DCI, réalisé par un dispositif terminal ou une puce dans un dispositif terminal, dans lequel le procédé comprend :

la réception (S203) de DCI à partir d'un dispositif réseau, dans lequel les DCI comprennent des informations d'indication et $m_1$ blocs d'informations, les informations d'indication sont utilisées pour indiquer $b_1$ dispositifs terminaux parmi $N$ dispositifs terminaux, $m_1 \le b_1 \le N$, et le dispositif terminal est un des $b_1$ dispositifs terminaux ; et
la détermination (S204), sur la base des informations d'indication et des informations de domaine temporel des DCI, d'un bloc d'informations utilisé pour indiquer des informations d'économie d'énergie du dispositif terminal à partir des $m_1$ blocs d'informations, dans lequel les informations de domaine temporel comprennent un numéro de trame d'une trame dans laquelle les DCI sont situées et/ou un numéro de créneau d'un créneau dans lequel les DCI sont situées.

7. Procédé selon la revendication 6, dans lequel les informations d'indication sont une première séquence de bits ; et
la détermination (S204), sur la base des informations d'indication et des informations de domaine temporel des DCI, d'un bloc d'informations utilisé pour indiquer des informations d'économie d'énergie du dispositif terminal à partir des $m_1$ blocs d'informations comprend :

la détermination de la première valeur de décalage cyclique sur la base des informations de domaine temporel des DCI ; et

la réalisation, sur la base de la première valeur de décalage cyclique, d'un décalage cyclique sur tout ou une partie de la première séquence de bits, pour déterminer le bloc d'informations utilisé pour indiquer les informations d'économie d'énergie du dispositif terminal à partir des $m_1$ blocs d'informations.

8. Procédé selon la revendication 7, dans lequel les informations d'indication sont la première séquence de bits, la première séquence de bits comprend $N$ bits, et un bit parmi les $N$ bits correspond au dispositif terminal ; et la réalisation, sur la base de la première valeur de décalage cyclique, d'un décalage cyclique sur tout ou une partie des informations d'indication, pour déterminer le bloc d'informations utilisé pour indiquer les informations d'économie d'énergie du dispositif terminal à partir des $m_1$ blocs d'informations comprend :

la réalisation, sur la base de la première valeur de décalage cyclique, du décalage cyclique sur la première séquence de bits, pour obtenir une deuxième séquence de bits ;

la détermination, qu'un bit correspondant au dispositif terminal dans la deuxième séquence de bits est un $i^{-ième}$ bit dont la valeur est une première valeur d'état ; et

la détermination, qu'un $i^{-ième}$ bloc d'informations dans les $m_1$ blocs d'informations est le bloc d'informations utilisé pour indiquer les informations d'économie d'énergie du dispositif terminal.

9. Procédé selon la revendication 8, dans lequel la première valeur de décalage cyclique satisfait :

$$p_1 = \left( \left\lfloor \left( n_f \times N_{slot}^{frame} + n_{s,f} \right) / k_s \right\rfloor \right) mod\ N,$$

$$p_1 = \left( n_f \times N_{slot}^{frame} + n_{s,f} \right) mod\ N,$$

ou

$$p_1 = \left( n_f + n_{s,f} \right) mod\ N,$$

dans lequel

$p_1$ est la première valeur de décalage cyclique, $n_f$ est le numéro de trame, $n_{s,f}$ est le numéro de créneau, $N_{slot}^{frame}$ est une quantité de créneaux compris dans une trame, $k_s$ est une périodicité de surveillance des DCI, et *mod* représente une opération modulo.

10. Procédé selon la revendication 7, dans lequel les informations d'indication sont la première séquence de bits, la première séquence de bits comprend $N$ bits, et un bit parmi les $N$ bits correspond au dispositif terminal ; et la réalisation, sur la base de la première valeur de décalage cyclique, d'un décalage cyclique sur tout ou une partie de la première séquence de bits, pour déterminer le bloc d'informations utilisé pour indiquer les informations d'économie d'énergie du dispositif terminal à partir des $m_1$ blocs d'informations comprend :

la détermination d'une troisième séquence de bits sur la base de la première séquence de bits, dans lequel la troisième séquence de bits comprend $b_1$ bits qui sont dans les $N$ bits et qui correspondent aux $b_1$ dispositifs terminaux ;

la réalisation, sur la base de la première valeur de décalage cyclique, d'un décalage cyclique sur la troisième séquence de bits, pour obtenir une quatrième séquence de bits ;

la détermination

qu'un bit correspondant au dispositif terminal dans la quatrième séquence de bits est un $i^{-ième}$ bit ; et

la détermination qu'un $i^{-ième}$ bloc d'informations dans les $m_1$ blocs d'informations est le bloc d'informations utilisé pour indiquer les informations d'économie d'énergie du dispositif terminal.

11. Procédé selon la revendication 5 ou 10, dans lequel la première valeur de décalage cyclique satisfait :

$$p_1 = \left(\left\lfloor \left(n_f \times N_{slot}^{frame} + n_{s,f}\right)/k_s\right\rfloor\right) mod\ b_1,$$

$$p_1 = \left(n_f \times N_{slot}^{frame} + n_{s,f}\right) mod\ b_1,$$

ou

$$p_1 = \left(n_f + n_{s,f}\right) mod\ b_1,$$

dans lequel

$p_1$ est la première valeur de décalage cyclique, $n_f$ est le numéro de trame, $n_{s,f}$ est le numéro de créneau, $N_{slot}^{frame}$ est une quantité de créneaux compris dans une trame, $k_s$ est une périodicité de surveillance des DCI, et *mod* représente une opération modulo.

12. Procédé selon l'une quelconque des revendications 1, 2, 5, 6, 7, 10 et 11, dans lequel $m_1 = b_1$, et une taille de chaque bloc d'informations dans les $m_1$ blocs d'informations est déterminée sur la base d'une valeur maximale d'une somme de quantités de bits des blocs d'informations compris dans les DCI et $b_1$.

13. Procédé selon la revendication 12, dans lequel la taille de chaque bloc d'informations parmi les $m_1$ blocs d'informations satisfait :

$$\beta_1 = min\{\lceil Z_1/m_1\rceil, \beta_{max1}\},$$

ou

$$\beta_1 = min\{\lfloor Z_1/m_1\rfloor, \beta_{max1}\},$$

dans lequel
$\beta_1$ est une quantité de bits compris dans chaque bloc d'informations dans les $m_1$ blocs d'informations, $Z_1$ est la valeur maximale de la somme des quantités de bits des blocs d'informations compris dans les DCI, $\beta_{max1}$ est une valeur maximale de la quantité de bits compris dans chaque bloc d'informations dans les $m_1$ blocs d'informations, et $Z_1$ et $\beta_1$ sont des entiers positifs.

14. Appareil de communication, dans lequel l'appareil de communication est un dispositif réseau ou une puce dans un dispositif réseau configuré pour réaliser le procédé selon l'une quelconque des revendications 1 à 5 ; ou l'appareil de communication est un dispositif terminal ou une puce dans un dispositif terminal configuré pour réaliser le procédé selon l'une quelconque des revendications 6 à 13.

15. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 13.

FIG. 1

| Network device | | Terminal device |
|---|---|---|

Step S201: The network device determines DCI

Step S202: The network device sends the DCI to N terminal devices

Step S203: The terminal device receives the DCI from the network device

Step S204: The terminal device determines, based on indication information and time domain information of the DCI, an information block used to indicate power saving information of the terminal device from $m_1$ information blocks

FIG. 2

| | UE 0 | UE 1 | UE 2 | UE 3 | UE 4 | UE 5 | UE 6 | UE 7 |
|---|---|---|---|---|---|---|---|---|
| First bit sequence | 0 | 1 | 1 | 0 | 1 | 1 | 0 | 1 |

High bit      Low bit

FIG. 3

DCI

| First bit sequence | Information block 0 | Information block 1 | ... | Information block $m_1-1$ | CRC |
|---|---|---|---|---|---|

Indication information

$m_1$ information blocks

FIG. 4

Cyclic shift is performed by using a cyclic shift value 3

UE 0 UE 1 UE 2 UE 3 UE 4 UE 5 UE 6 UE 7

| 0 | 1 | 1 | 0 | 1 | 1 | 0 | 1 |

UE 3 UE 4 UE 5 UE 6 UE 7 UE 0 UE 1 UE 2

| 0 | 1 | 1 | 0 | 1 | 0 | 1 | 1 | Second bit sequence

| First bit sequence | Information block 0 | Information block 1 | Information block 2 | Information block 3 | CRC |

FIG. 5

EP 4 017 135 B1

UE 1 UE 2 UE 4 UE 5 UE 7

| 1 | 1 | 1 | 1 | 1 |

Third bit sequence

Extract b1 bits whose values are
1 in a first bit sequence

Cyclic shift is performed by
using a cyclic shift value 3

UE 0 UE 1 UE 2 UE 3 UE 4 UE 5 UE 6 UE 7

| 0 | 1 | 1 | 0 | 1 | 1 | 0 | 1 |

UE 5 UE 7 UE 1 UE 2 UE 4

| 1 | 1 | 1 | 1 | 1 |

Fourth bit sequence

| First bit sequence | Information block 0 | Information block 1 | Information block 2 | Information block 3 | CRC |

FIG. 6

| Network device | | Terminal device |
|---|---|---|

Step S701: The network device determines DCI, where the DCI includes indication information, $Y_1$ first-type information blocks, and $Y_2$ second-type information blocks

Step S702: The network device sends the DCI to N terminal devices

Step S703: The terminal device receives the DCI from the network device

Step S704: The terminal device determines, based on the indication information in the DCI and time domain information of the DCI, an information block used to indicate power saving information of the terminal device from the $Y_1$ first-type information blocks or the $Y_2$ second-type information blocks

FIG. 7a

FIG. 7b

CRC

Information
block Y2–1

⋮

Information
block 1

Information
block 0

Information
block
Y1–1

⋮

Information
block 1

Information
block 0

Indication
information

$(F_3-1)^{th}$ UE that is not woken up

$(F_2-1)^{th}$ UE that is woken up

FIG. 7c

Network device

Terminal device

Step S801: The network device determines DCI

Step S802: The network device sends the DCI to N terminal devices

Step S803: The terminal device receives the DCI from the network device

Step S804: The terminal device determines, based on indication information and time domain information of the DCI, an information block used to indicate power saving information of the terminal device

FIG. 8a

CRC

Information
block
Y−1

Information
block
Y−2

⋮

Information
block 2

Information
block 1

Information
block 0

Indication
information

Information blocks of UEs that
are not woken up

Information blocks of UEs that
are woken up

FIG. 8b

| |
|---|
| CRC |
| Information block Y−1 |
| Information block Y−2 |

⋮

| |
|---|
| |
| |
| Information block 2 |
| Information block 1 |
| Information block 0 |
| Indication information |

$F_4^{th}$ UE

$(F_4-1)^{th}$ UE

FIG. 8c

Communications apparatus 900

Transceiver module 910 ——— Processing module 920

FIG. 9

10011 ⌐ 1001

Antenna

10012

Radio frequency unit

1000

BBU

RRU

Board

10021    10022

Memory —— Processor

1002

FIG. 10

Communications apparatus 1100

| Transceiver module 1110 | Processing module 1120 |

FIG. 11

Antenna

Control circuit

1210

Memory

Processor

1220

Input/Output apparatus

FIG. 12

**EP 4 017 135 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018006237 A1
- US 2019082427 A1
- WO 2019027262 A1